# EUROPEAN PATENT APPLICATION

(11) **EP 4 080 360 A1**
(43) Date of publication of application: **26.10.2022**
(21) Application number: 21878752.1
(22) Date of filing: 22.10.2021
(51) Int. Cl.: G06F 9/455, G06F 9/451, G06F 15/78, B60R 16/023

(54) **SIGNAL PROCESSING DEVICE, AND VEHICLE DISPLAY DEVICE COMPRISING SAME**

(30) Priority: 26.02.2021 KR 20210026453; 23.04.2021 KR 20210053004
(71) Applicant: LG ELECTRONICS INC., Yeongdeungpo-Gu Seoul 07336 (KR)
(72) Inventor: HAN, Dongwoo, Seoul 06772 (KR); YOON, Jaegu, Seoul 06772 (KR); LEE, Dongkyu, Seoul 06772 (KR); JUNG, Dukyung, Seoul 06514 (KR)
(74) Representative: Vossius & Partner Patentanwälte Rechtsanwälte mbB
(86) International application number: PCT/KR2021/014950
(87) International publication number: WO 2022/181922

(57) **Abstract**

A signal processing device and a display apparatus for vehicles including the same are disclosed. The signal processing device includes a processor configured to perform signal processing for a display located in a vehicle, wherein the processor executes first to third virtual machines on a hypervisor in the processor, the second virtual machine is operated for a first display, the third virtual machine is operated for a second display, and the first virtual machine in the processor receives touch input to the first display or the second display and transmits information regarding the touch input to the second virtual machine or the third virtual machine. Consequently, touch input may be rapidly and accurately processed.

## Description

### BACKGROUND OF THE DISCLOSURE

### 1. Field of the disclosure

The present disclosure relates to a signal processing device and a display apparatus for vehicles including the same, and more particularly to a signal processing device capable of rapidly and accurately processing touch input and a display apparatus for vehicles including the same.

### 2. Description of the Related Art

A vehicle is an apparatus that a driver moves in a desired direction. A representative example of the vehicle is a car.

Meanwhile, a display apparatus for vehicles is located in the vehicle for convenience of users who use the vehicle.

For example, a display is disposed in a cluster in order to display various kinds of information. Meanwhile, in order to display vehicle driving information, various displays, such as an audio video navigation (AVN) display, are located in the vehicle, in addition to the cluster.

In the case in which the number of displays in the display apparatus for vehicles is increased, however, signal processing for the displays is complicated.

Particularly, in response to touch input being performed in the state in which partially the same overlays are displayed on a plurality of displays, it is important to accurately process the touch input.

### SUMMARY

An object of the present disclosure is to provide a signal processing device capable of rapidly and accurately processing touch input and a display apparatus for vehicles including the same.

Another object of the present disclosure is to provide a signal processing device capable of rapidly and accurately processing touch input even though the number of virtual machines is increased and a display apparatus for vehicles including the same.

A further object of the present disclosure is to provide a signal processing device capable of rapidly and accurately processing touch input even though operating systems of a plurality of virtual machines are different from each other and a display apparatus for vehicles including the same.

In accordance with an aspect of the present disclosure, the above and other objects can be accomplished by the provision of a signal processing device including a processor configured to perform signal processing for a display located in a vehicle, wherein the processor executes first to third virtual machines on a hypervisor in the processor, the second virtual machine is operated for a first display, the third virtual machine is operated for a second display, and the first virtual machine in the processor receives touch input to the first display or the second display and transmits information regarding the touch input to the second virtual machine or the third virtual machine.

Meanwhile, the touch input may not be input to the second virtual machine and the third virtual machine.

Meanwhile, the first virtual machine in the processor may include a physical device driver configured to receive the touch input, and each of the second virtual machine and the third virtual machine may include no physical device driver.

Meanwhile, the information regarding the touch input may include coordinate information of the touch input.

Meanwhile, in response to touch input corresponding to an overlay provided by the third virtual machine, among a plurality of overlays displayed on the first display, the first virtual machine in the processor may transmit the information regarding the touch input not to the second virtual machine but to the third virtual machine.

Meanwhile, in response to touch input corresponding to an overlay provided by the second virtual machine, among a plurality of overlays displayed on the first display, the first virtual machine in the processor may transmit the information regarding the touch input to the second virtual machine.

Meanwhile, in response to touch input corresponding to an overlay provided by the second virtual machine, among a plurality of overlays displayed on the second display, the first virtual machine in the processor may transmit the information regarding the touch input to the second virtual machine.

Meanwhile, in response to touch input corresponding to an overlay provided by the third virtual machine, among a plurality of overlays displayed on the second display, the first virtual machine in the processor may transmit the information regarding the touch input to the third virtual machine.

Meanwhile, the first virtual machine in the processor may detect an overlay corresponding to the touch input, and may transmit the information regarding the touch input to a virtual machine providing the detected overlay, which is one of the second virtual machine and the third virtual machine.

Meanwhile, the first virtual machine may be configured to store coordinate information of the touch input in a shared memory.

Meanwhile, the first virtual machine may transmit a buffer index regarding the shared memory to the second virtual machine or the third virtual machine, and the second virtual machine or the third virtual machine may read the coordinate information of the touch input written in the shared memory based on the received buffer index.

Meanwhile, the first virtual machine may include an input and output server interface, each of the second virtual machine and the third virtual machine may include an input and output client interface, the input and output server interface in the first virtual machine may be configured to store coordinate information of the touch input in the shared memory, and the input and output client interface in the second virtual machine or the third virtual machine may read the coordinate information of the touch input written in the shared memory.

Meanwhile, the first virtual machine may be configured to transmit a composite overlay generated by combining an overlay from the second virtual machine and at least one overlay from the third virtual machine with each other to the second virtual machine or the third virtual machine.

Meanwhile, in response to the information regarding the touch input corresponding to at least one overlay from the third virtual machine, the first virtual machine may be configured to transmit the information regarding the touch input to the third virtual machine, and the third virtual machine may change the at least one overlay based on the touch input and may be configured to display the changed overlay on the second display.

Meanwhile, the third virtual machine may transmit the changed overlay to the first virtual machine, and the first virtual machine may be configured to transmit the changed overlay to the second virtual machine.

Meanwhile, in response to the information regarding the touch input corresponding to operation of a hardware device in the vehicle while corresponding to at least one overlay from the third virtual machine, the first virtual machine may be configured to transmit the information regarding the touch input to the third virtual machine and may be configured to operate the hardware device in the vehicle based on the touch input.

Meanwhile, in response to the information regarding the touch input corresponding to an overlay from the second virtual machine, the first virtual machine may be configured to transmit the information regarding the touch input to the second virtual machine, and the second virtual machine may change the overlay based on the touch input and may be configured to display the changed overlay on the second display.

Meanwhile, the second virtual machine may transmit the changed overlay to the first virtual machine, and the first virtual machine may be configured to transmit the changed overlay to the third virtual machine.

Meanwhile, the processor may further execute a fourth virtual machine operated for a third display on the hypervisor in the processor, and the first virtual machine in the processor may receive touch input to any one of the first display to the third display and may transmit information regarding the received touch input to any one of the second virtual machine to the fourth virtual machine.

Meanwhile, the processor may further execute a legacy virtual machine configured to receive and process Ethernet data, and the first virtual machine may receive, process, and output vehicle sensor data, position information data, camera image data, audio data, or touch input data.

Meanwhile, the first virtual machine may receive and process wheel speed sensor data of the vehicle, and may transmit an overlay indicating the processed wheel speed sensor data or speed information corresponding to the processed wheel speed sensor data to at least one of the second virtual machine or the third virtual machine.

In accordance with another aspect of the present disclosure, there is provided a display apparatus for vehicles, the display apparatus including a first display, a second display, and a signal processing device including a processor configured to perform signal processing for the first display and the second display, wherein the processor executes first to third virtual machines on a hypervisor in the processor, the second virtual machine is operated for the first display, the third virtual machine is operated for the second display, and the first virtual machine in the processor receives touch input to the first display or the second display and transmits information regarding the touch input to the second virtual machine or the third virtual machine.

### EFFECT OF THE DISCLOSURE

A signal processing device according to an embodiment of the present disclosure includes a processor configured to perform signal processing for a display located in a vehicle, wherein the processor executes first to third virtual machines on a hypervisor in the processor, the second virtual machine is operated for a first display, the third virtual machine is operated for a second display, and the first virtual machine in the processor receives touch input to the first display or the second display and transmits information regarding the touch input to the second virtual machine or the third virtual machine. Consequently, the touch input may be rapidly and accurately processed. In addition, the touch input may be rapidly and accurately processed even though the number of virtual machines that are driven is increased. Furthermore, the touch input may be rapidly and accurately processed even though operating systems of a plurality of virtual machines are different from each other.

Meanwhile, the touch input may not be input to the second virtual machine and the third virtual machine. Consequently, the touch input may be rapidly and accurately processed through the first virtual machine.

Meanwhile, the first virtual machine in the processor may include a physical device driver configured to receive the touch input, and each of the second virtual machine and the third virtual machine may include no physical device driver. Consequently, the touch input may be rapidly and accurately processed through the first virtual machine.

Meanwhile, the information regarding the touch input may include coordinate information of the touch input. Consequently, the touch input may be rapidly and accurately processed.

Meanwhile, in response to touch input corresponding to an overlay provided by the third virtual machine, among a plurality of overlays displayed on the first display, the first virtual machine in the processor may transmit the information regarding the touch input not to the second virtual machine but to the third virtual machine. Consequently, the touch input may be rapidly and accurately processed.

Meanwhile, in response to touch input corresponding to an overlay provided by the second virtual machine, among a plurality of overlays displayed on the first display, the first virtual machine in the processor may transmit the information regarding the touch input to the second virtual machine. Consequently, the touch input may be rapidly and accurately processed.

Meanwhile, in response to touch input corresponding to an overlay provided by the second virtual machine, among a plurality of overlays displayed on the second display, the first virtual machine in the processor may transmit the information regarding the touch input to the second virtual machine. Consequently, the touch input may be rapidly and accurately processed.

Meanwhile, in response to touch input corresponding to an overlay provided by the third virtual machine, among a plurality of overlays displayed on the second display, the first virtual machine in the processor may transmit the information regarding the touch input to the third virtual machine. Consequently, the touch input may be rapidly and accurately processed.

Meanwhile, the first virtual machine in the processor may detect an overlay corresponding to the touch input, and may transmit the information regarding the touch input to a virtual machine providing the detected overlay, which is one of the second virtual machine and the third virtual machine. Consequently, the touch input may be rapidly and accurately processed.

Meanwhile, the first virtual machine may be configured to store coordinate information of the touch input in a shared memory. Consequently, the touch input may be rapidly and accurately processed.

Meanwhile, the first virtual machine may transmit a buffer index regarding the shared memory to the second virtual machine or the third virtual machine, and the second virtual machine or the third virtual machine may read the coordinate information of the touch input written in the shared memory based on the received buffer index. Consequently, the touch input may be rapidly and accurately processed.

Meanwhile, the first virtual machine may include an input and output server interface, each of the second virtual machine and the third virtual machine may include an input and output client interface, the input and output server interface in the first virtual machine may be configured to store coordinate information of the touch input in the shared memory, and the input and output client interface in the second virtual machine or the third virtual machine may read the coordinate information of the touch input written in the shared memory. Consequently, the touch input may be rapidly and accurately processed.

Meanwhile, the first virtual machine may be configured to transmit a composite overlay generated by combining an overlay from the second virtual machine and at least one overlay from the third virtual machine with each other to the second virtual machine or the third virtual machine. Consequently, a composite overlay using overlays of a plurality of virtual machines may be displayed.

Meanwhile, in response to the information regarding the touch input corresponding to at least one overlay from the third virtual machine, the first virtual machine may be configured to transmit the information regarding the touch input to the third virtual machine, and the third virtual machine may change the at least one overlay based on the touch input and may be configured to display the changed overlay on the second display. Consequently, the changed overlay corresponding to the touch input may be rapidly and accurately displayed.

Meanwhile, the third virtual machine may transmit the changed overlay to the first virtual machine, and the first virtual machine may be configured to transmit the changed overlay to the second virtual machine. Consequently, the changed overlay corresponding to the touch input may be rapidly and accurately displayed.

Meanwhile, in response to the information regarding the touch input corresponding to operation of a hardware device in the vehicle while corresponding to at least one overlay from the third virtual machine, the first virtual machine may be configured to transmit the information regarding the touch input to the third virtual machine and may be configured to operate the hardware device in the vehicle based on the touch input. Consequently, the operation of the hardware device corresponding to the touch input may be rapidly and accurately performed.

Meanwhile, in response to the information regarding the touch input corresponding to an overlay from the second virtual machine, the first virtual machine may be configured to transmit the information regarding the touch input to the second virtual machine, and the second virtual machine may change the overlay based on the touch input and may be configured to display the changed overlay on the second display. Consequently, the changed overlay corresponding to the touch input may be rapidly and accurately displayed.

Meanwhile, the second virtual machine may transmit the changed overlay to the first virtual machine, and the first virtual machine may be configured to transmit the changed overlay to the third virtual machine. Consequently, the changed overlay corresponding to the touch input may be rapidly and accurately displayed.

Meanwhile, the processor may further execute a fourth virtual machine operated for a third display on the hypervisor in the processor, and the first virtual machine in the processor may receive touch input to any one of the first display to the third display and may transmit information regarding the received touch input to any one of the second virtual machine to the fourth virtual machine. Consequently, the touch input may be rapidly and accurately processed.

Meanwhile, the processor may further execute a legacy virtual machine configured to receive and process Ethernet data, and the first virtual machine may receive, process, and output vehicle sensor data, position information data, camera image data, audio data, or touch input data. Consequently, data processed only by the legacy virtual machine and data processed by the first virtual machine may be distinguished from each other, whereby data processing may be efficiently performed.

Meanwhile, the first virtual machine may receive and process wheel speed sensor data of the vehicle, and may transmit an overlay indicating the processed wheel speed sensor data or speed information corresponding to the processed wheel speed sensor data to at least one of the second virtual machine or the third virtual machine. Consequently, at least one virtual machine may share the wheel speed sensor data of the vehicle.

A display apparatus for vehicles according to an embodiment of the present disclosure includes a first display, a second display, and a signal processing device including a processor configured to perform signal processing for the first display and the second display, wherein the processor executes first to third virtual machines on a hypervisor in the processor, the second virtual machine is operated for the first display, the third virtual machine is operated for the second display, and the first virtual machine in the processor receives touch input to the first display or the second display and transmits information regarding the touch input to the second virtual machine or the third virtual machine. Consequently, the touch input may be rapidly and accurately processed. In addition, the touch input may be rapidly and accurately processed even though the number of virtual machines that are driven is increased. Furthermore, the touch input may be rapidly and accurately processed even though operating systems of a plurality of virtual machines are different from each other.

### BRIEF DESCRIPTION OF THE DRAWINGS

FIG. 1A is a view showing an example of the exterior and interior of a vehicle;
FIG. 1B is a view showing another example of the interior of the vehicle;
FIG. 2 is a view showing the external appearance of a display apparatus for vehicles according to an embodiment of the present disclosure;
FIG. 3 illustrates an example of an internal block diagram of the display apparatus for vehicles of FIG. 2;
FIG. 4 is a view showing a system driven in a signal processing device related to the present disclosure;
FIG. 5 is a view showing an example of a system driven in a signal processing device according to an embodiment of the present disclosure;
FIG. 6 is a view showing another example of the system driven in the signal processing device according to the embodiment of the present disclosure;
FIG. 7 is a view showing a further example of the system driven in the signal processing device according to the embodiment of the present disclosure;
FIGS. 8 to 9B are views referred to in the description of FIG. 5; and
FIGS. 10A to 15C are views referred to in the description of FIGS. 5 to 7.

### DETAILED DESCRIPTION OF THE PREFERRED EMBODIMENTS

Hereinafter, the present disclosure will be described in detail with reference to the accompanying drawings.

With respect to constituent elements used in the following description, suffixes "module" and "unit" are given only in consideration of ease in preparation of the specification, and do not have or serve different meanings. Accordingly, the suffixes "module" and "unit" may be used interchangeably.

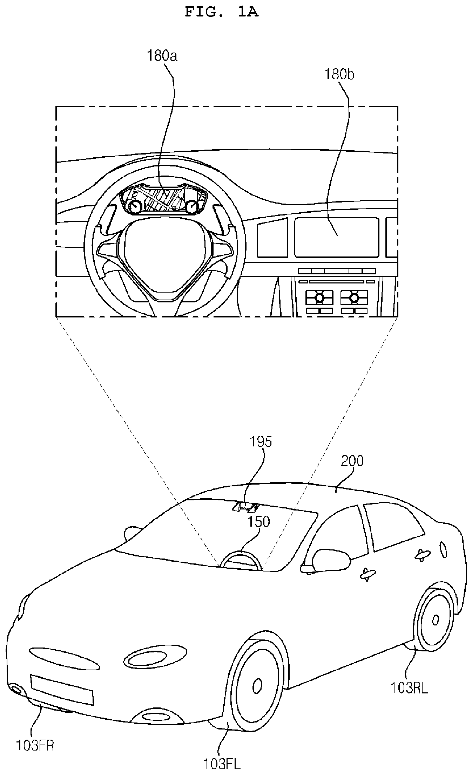

FIG. 1A is a view showing an example of the exterior and interior of a vehicle.

Referring to the figure, the vehicle 200 is moved by a plurality of wheels 103FR, 103FL, 103RL,... rotated by a power source and a steering wheel 150 configured to adjust an advancing direction of the vehicle 200.

Meanwhile, the vehicle 200 may be provided with a camera 195 configured to acquire an image of the front of the vehicle.

Meanwhile, the vehicle 200 may be further provided therein with a plurality of displays 180a and 180b configured to display images and information.

In FIG. 1A, a cluster display 180a and an audio video navigation (AVN) display 180b are illustrated as the plurality of displays 180a and 180b. In addition, a head up display (HUD) may also be used.

Meanwhile, the audio video navigation (AVN) display 180b may also be called a center information display.

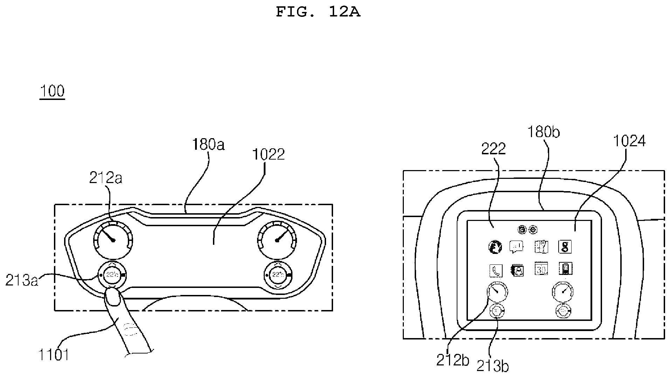

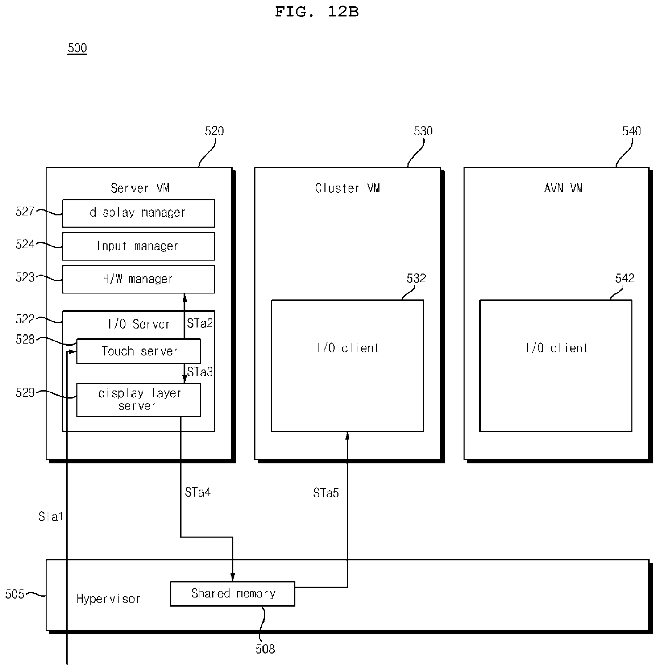

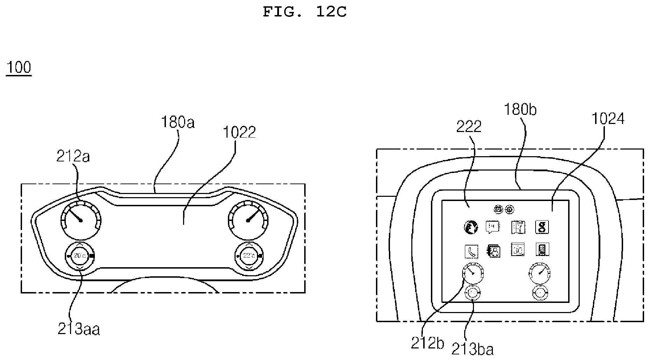

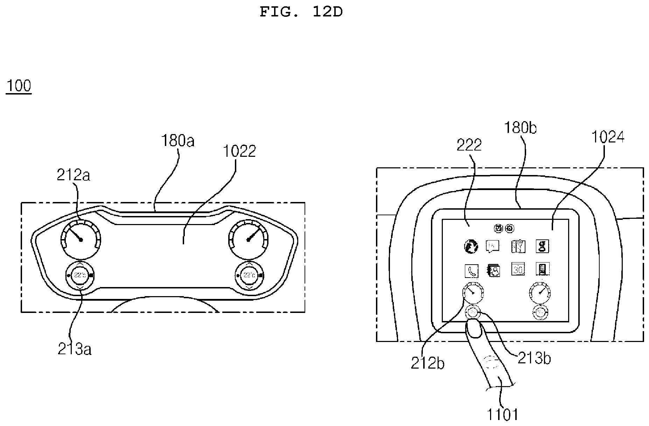

The embodiment of the present disclosure proposes a scheme for a display apparatus 100 for vehicles including a plurality of displays 180a and 180b to divide data processing. This will be described with reference to FIG. 12 and subsequent figures.

Meanwhile, the vehicle 200 described in this specification may be a concept including all of a vehicle having an engine as a power source, a hybrid vehicle having an engine and an electric motor as a power source, and an electric vehicle having an electric motor as a power source.

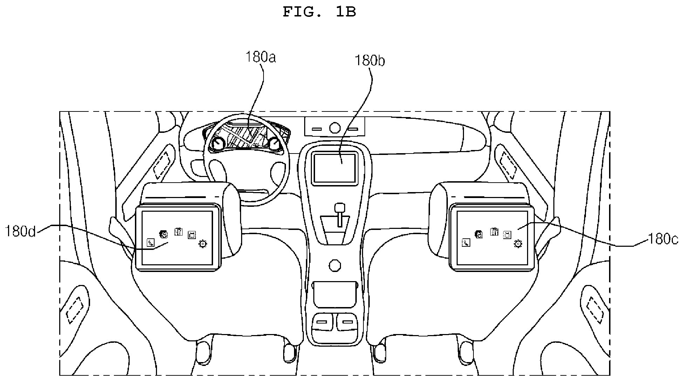

FIG. 1B is a view showing another example of the interior of the vehicle.

Referring to the figure, a cluster display 180a, an audio video navigation (AVN) display 180b, rear seat entertainment displays 180c and 180d, and a rear-view mirror display (not shown) may be located in the vehicle.

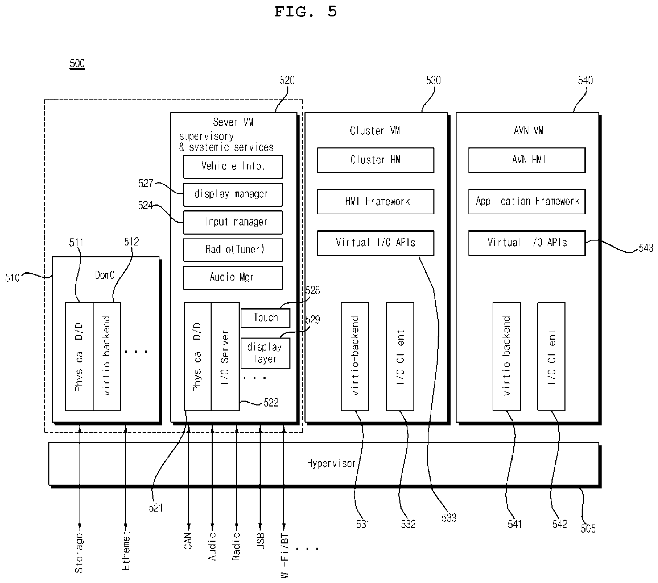

The embodiment of the present disclosure proposes a scheme for a display apparatus 100 for vehicles including a plurality of displays 180a to 180d to rapidly and accurately process touch input. This will be described with reference to FIG. 5 and subsequent figures.

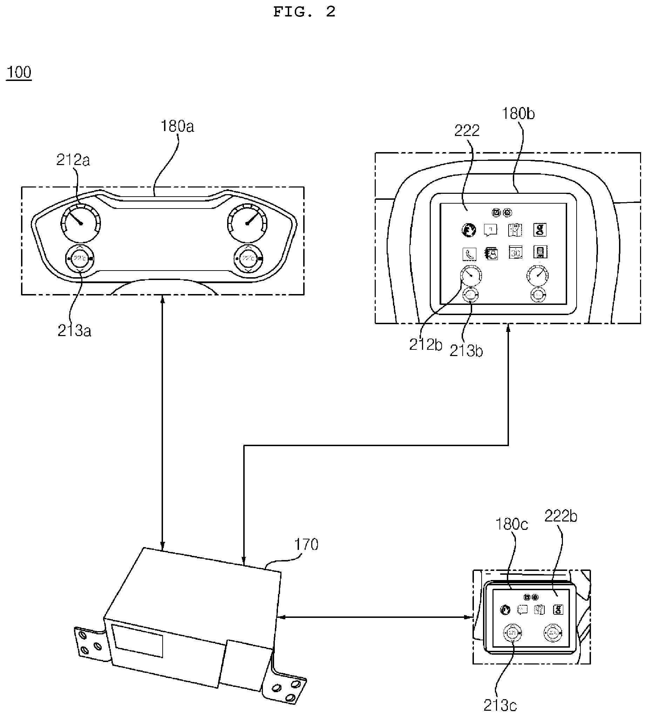

FIG. 2 is a view showing the external appearance of a display apparatus for vehicles according to an embodiment of the present disclosure.

The display apparatus 100 for vehicles according to the embodiment of the present disclosure may include a plurality of displays 180a and 180b and a signal processing device 170 configured to perform signal processing in order to display images and information on the plurality of displays 180a and 180b.

The first display 180a, which is one of the plurality of displays 180a and 180b, may be a cluster display 180a configured to display a driving state and operation information, and the second display 180b may be an audio video navigation (AVN) display 180b configured to display vehicle driving information, a navigation map, various kinds of entertainment information, or an image.

The signal processing device 170 may have a processor 175 provided therein, and first to third virtual machines 520 to 540 may be executed by a hypervisor 505 in the processor 175.

The second virtual machine 530 may be operated for the first display 180a, and the third virtual machine 540 may be operated for the second display 180b.

Meanwhile, the first virtual machine 520 in the processor 175 may be configured to set a shared memory 508 based on the hypervisor 505 for transmission of the same data to the second virtual machine 530 and the third virtual machine 540. Consequently, the first display 180a and the second display 180b in the vehicle may display the same information or the same images in a synchronized state.

Meanwhile, the first virtual machine 520 in the processor 175 shares at least some of data with the second virtual machine 530 and the third virtual machine 540 for divided processing of data. Consequently, the plurality of virtual machines for the plurality of displays in the vehicle may divide and process data.

Meanwhile, the first virtual machine 520 in the processor 175 may receive and process wheel speed sensor data of the vehicle, and may transmit the processed wheel speed sensor data to at least one of the second virtual machine 530 or the third virtual machine 540. Consequently, at least one virtual machine may share the wheel speed sensor data of the vehicle.

Meanwhile, the display apparatus 100 for vehicles according to the embodiment of the present disclosure may further include a rear seat entertainment (RSE) display 180c configured to display driving state information, simple navigation information, various kinds of entertainment information, or an image.

The signal processing device 170 may further execute a fourth virtual machine (not shown), in addition to the first to third virtual machines 520 to 540, on the hypervisor 505 in the processor 175 to control the RSE display 180c.

Consequently, it is possible to control various displays 180a to 180c using a single signal processing device 170.

Meanwhile, some of the plurality of displays 180a to 180c may be operated based on a Linux Operating System (OS), and others may be operated based on a Web Operating System (OS).

In response to touch input to any one of the displays 180a and 180b or 180a to 180c configured to be operated under various operating systems, the signal processing device 170 according to the embodiment of the present disclosure may be configured to rapidly and accurately process the touch input.

Meanwhile, FIG. 2 illustrates that a vehicle speed indicator 212a and an in-vehicle temperature indicator 213a are displayed on the first display 180a, a home screen 222 including a plurality of applications, a vehicle speed indicator 212b, and an in-vehicle temperature indicator 213b is displayed on the second display 180b, and a home screen 222b including a plurality of applications and an in-vehicle temperature indicator 213c is displayed on the third display 180c.

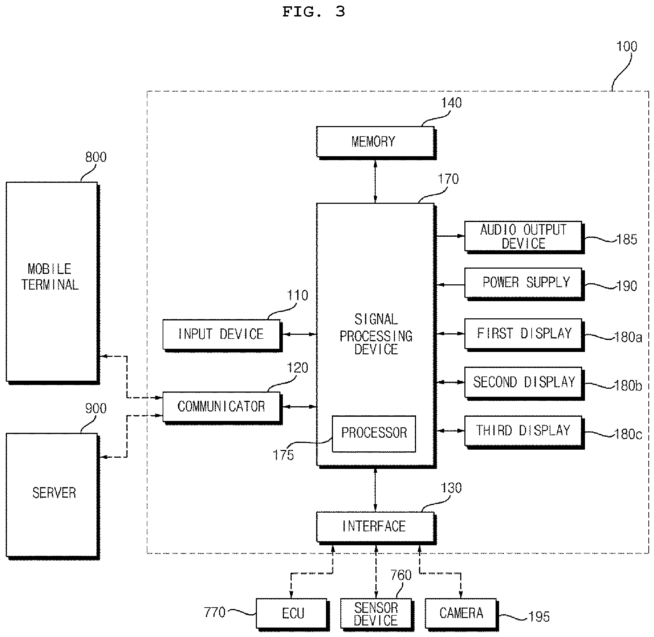

FIG. 3 illustrates an example of an internal block diagram of the display apparatus for vehicles according to the embodiment of the present disclosure.

Referring to the figure, the display apparatus 100 for vehicles according to the embodiment of the present disclosure may include an input device 110, a communicator 120, an interface 130, a memory 140, a signal processing device 170, a plurality of displays 180a to 180c, an audio output device 185, and a power supply 190.

The input device 110 may include a physical button or pad for button input or touch input.

Meanwhile, the input device 110 may include a touch sensor (not shown) configured to sense touch input to the displays 180a, 180b, and 180c.

Meanwhile, the input device 110 may include a microphone (not shown) for user voice input.

The communicator 120 may wirelessly exchange data with a mobile terminal 800 or a server 900.

In particular, the communicator 120 may wirelessly exchange data with a mobile terminal of a vehicle driver. Any of various data communication schemes, such as Bluetooth, Wi-Fi, WIFI Direct, and APIX, may be used as a wireless data communication scheme.

The communicator 120 may receive weather information and road traffic situation information, such as transport protocol expert group (TPEG) information, from the mobile terminal 800 or the server 900. To this end, the communicator 120 may include a mobile communication module (not shown).

The interface 130 may receive sensor information from an electronic control unit (ECU) 770 or a sensor device 760, and may transmit the received information to the signal processing device 170.

Here, the sensor information may include at least one of vehicle direction information, vehicle position information (global positioning system (GPS) information), vehicle angle information, vehicle velocity information, vehicle acceleration information, vehicle inclination information, vehicle forward/backward movement information, battery information, fuel information, tire information, vehicle lamp information, in-vehicle temperature information, and in-vehicle humidity information.

The sensor information may be acquired from a heading sensor, a yaw sensor, a gyro sensor, a position sensor, a vehicle forward/backward movement sensor, a wheel sensor, a vehicle velocity sensor, a car body inclination sensor, a battery sensor, a fuel sensor, a tire sensor, a steering-wheel-rotation-based steering sensor, an in-vehicle temperature sensor, or an in-vehicle humidity sensor. Meanwhile, the position module may include a GPS module configured to receive GPS information.

Meanwhile, the interface 130 may receive front-of-vehicle image data, side-of-vehicle image data, rear-of-vehicle image data, and obstacle-around-vehicle distance information from a camera 195 or lidar (not shown), and may transmit the received information to the signal processing device 170.

The memory 140 may store various data necessary for overall operation of the display apparatus 100 for vehicles, such as programs for processing or control of the signal processing device 170.

For example, the memory 140 may store data about the hypervisor and first to third virtual machines executed by the hypervisor in the processor 175.

Meanwhile, the memory 140 may be provided in the signal processing device 170. At this time, a shared memory 508, a description of which will follow, may be provided in the signal processing device 170.

The audio output device 185 may convert an electrical signal from the signal processing device 170 into an audio signal, and may output the audio signal. To this end, the audio output device 185 may include a speaker.

The power supply 190 may supply power necessary to operate components under control of the signal processing device 170. In particular, the power supply 190 may receive power from a battery in the vehicle.

The signal processing device 170 may control overall operation of each device in the display apparatus 100 for vehicles.

For example, the signal processing device 170 may include a processor 175 configured to perform signal processing for the displays 180a and 180b.

The processor 175 may execute the first to third virtual machines 520 to 540 on the hypervisor 505 (see FIG. 5) in the processor 175.

Meanwhile, the processor 175 may further execute a legacy virtual machine configured to receive and process Ethernet data. For example, as shown in FIG. 5, the legacy virtual machine 510 may be executed by the first virtual machine 520 in the processor 175.

Among the first to third virtual machines 520 to 540 (see FIG. 5), the first virtual machine 520 may be called a server virtual machine, and the second and third virtual machines 530 and 540 may be called guest virtual machines.

The second virtual machine 530 may be operated for the first display 180a, and the third virtual machine 540 may be operated for the second display 180b.

For example, the first virtual machine 520 in the processor 175 may receive, process, and output vehicle sensor data, position information data, camera image data, audio data, or touch input data. Data processed only by a legacy virtual machine and data processed by the first virtual machine 520 may be distinguished from each other, whereby data processing may be efficiently performed. In particular, the first virtual machine 520 may process most of the data, whereby 1:N data sharing may be achieved.

As another example, the first virtual machine 520 may directly receive and process CAN communication data, audio data, radio data, USB data, and wireless communication data for the second and third virtual machines 530 and 540.

The first virtual machine 520 may transmit the processed data to the second and third virtual machines 530 and 540.

Consequently, only the first virtual machine 520, among the first to third virtual machines 520 to 540, may receive communication data and external input data, and may perform signal processing, whereby load in signal processing by the other virtual machines may be reduced and 1:N data communication may be achieved, and therefore synchronization at the time of data sharing may be achieved.

Meanwhile, the first virtual machine 520 writes some of data in a first shared memory (not shown) so as to be transmitted to the second virtual machine 530, and writes some other of data in the first shared memory (not shown) so as to be transmitted to the third virtual machine 540. The second virtual machine 530 and the third virtual machine 540 are configured to process the received data, and write the processed data in a second shared memory (not shown). Consequently, touch input may be rapidly and accurately processed.

At this time, data may be any one of image data, audio data, navigation data, and voice recognition data.

Meanwhile, the first virtual machine 520 may process some other of data, and may be configured to write the processed data in the second shared memory (not shown). That is, the first virtual machine 520 may perform data processing in addition to the second virtual machine 530 and the third virtual machine 540.

Meanwhile, in response to a fourth virtual machine 550 configured to be operated for the third display 180c being executed in the processor 175, the first virtual machine 520 may write some other of data in the first shared memory (not shown), and the fourth virtual machine 550 may process the received data and may be configured to write the processed data in the second shared memory (not shown).

Meanwhile, the first virtual machine 520 may generate command queues for distributed processing of data in the second virtual machine 530 and the third virtual machine 540. Consequently, the plurality of virtual machines may divide and process data.

Meanwhile, in response to the second virtual machine 530 and the third virtual machine 540 sharing the same data, the first virtual machine 520 in the processor 175 may generate one command queue. Consequently, the same data may be synchronized and shared.

Meanwhile, the first virtual machine 520 may generate command queues corresponding to the number of virtual machines for distributed processing of data.

Meanwhile, the first virtual machine 520 may be configured to transmit at least some of data to at least one of the second virtual machine 530 or the third virtual machine 540 for distributed processing of data.

For example, the first virtual machine 520 may allocate the first shared memory (not shown) for transmitting at least some of data to at least one of the second virtual machine 530 or the third virtual machine 540, and image data processed by the second virtual machine 530 or the third virtual machine 540 may be written in the second shared memory (not shown).

Meanwhile, the first virtual machine 520 may be configured to write data in the shared memory 508, whereby the second virtual machine 530 and the third virtual machine 540 share the same data.

For example, the first virtual machine 520 may be configured to write radio data or wireless communication data in the shared memory 508, whereby the second virtual machine 530 and the third virtual machine 540 share the same data. Consequently, 1:N data sharing may be achieved.

Eventually, the first virtual machine 520 may process most of the data, whereby 1:N data sharing may be achieved.

Meanwhile, the first virtual machine 520 in the processor 175 may be configured to set the shared memory 508 based on the hypervisor 505 in order to transmit the same data to the second virtual machine 530 and the third virtual machine 540.

That is, the first virtual machine 520 in the processor 175 may transmit the same data to the second virtual machine 530 and the third virtual machine 540 in a synchronized state using the shared memory 508 based on the hypervisor 505. Consequently, the plurality of displays 180a and 180b in the vehicle may display the same images in a synchronized state.

Meanwhile, the signal processing device 170 may process various signals, such as an audio signal, an image signal, and a data signal. To this end, the signal processing device 170 may be implemented in the form of a system on chip (SOC).

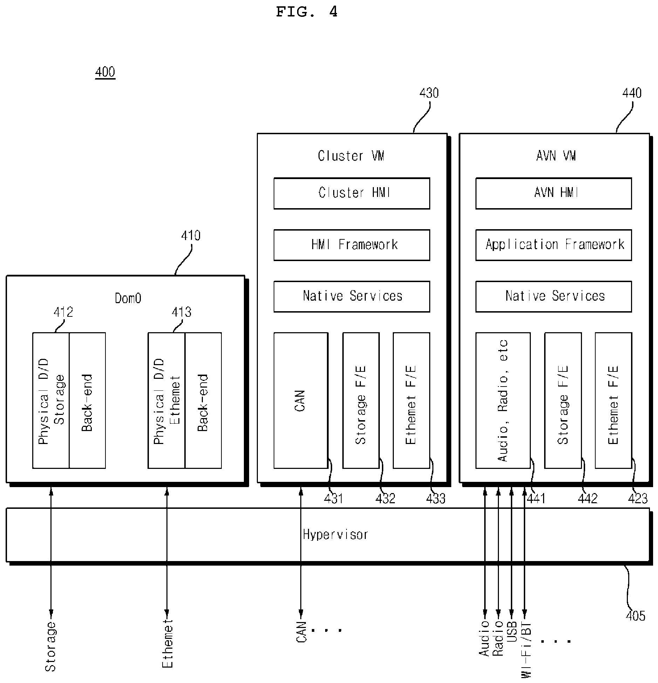

FIG. 4 is a view showing a system driven in a signal processing device related to the present disclosure.

Referring to the figure, FIG. 4 is a view illustrating that virtual machines are used for the cluster display 180a and the AVN display 180b.

The system 400 driven in the signal processing device of FIG. 4 illustrates that a cluster virtual machine 430 and an AVN virtual machine 440 are executed through a hypervisor 405 in the processor 175.

Meanwhile, the system 400 driven in the signal processing device of FIG. 4 illustrates that a legacy virtual machine 410 is also executed on the hypervisor 405 in the processor 175.

The legacy virtual machine 410 may include an interface 412 for data communication with the memory 140 and an interface 413 for Ethernet communication.

Meanwhile, the cluster virtual machine 430 may include an interface 431 for CAN communication, an interface 432 for communication with the interface 412 of the legacy virtual machine 410, and an interface 433 for communication with the interface 413 of the legacy virtual machine 410.

Meanwhile, the AVN virtual machine 440 may include an interface 441 for input and output of audio data, radio data, USB data, and wireless communication data, an interface 442 for communication with the interface 412 of the legacy virtual machine 410, and an interface 443 for communication with the interface 413 of the legacy virtual machine 410.

In the system 400, there is a disadvantage in that CAN communication data are input and output only in the cluster virtual machine 430, whereby the CAN communication data cannot be utilized in the AVN virtual machine 440.

Also, in the system 400 of FIG. 4, there is a disadvantage in that audio data, radio data, USB data, and wireless communication data are input and output only in the AVN virtual machine 440, whereby these data cannot be utilized in the cluster virtual machine 430.

Meanwhile, there is a disadvantage in that the cluster virtual machine 430 and the AVN virtual machine 440 must include the interfaces 431 and 432 and the interfaces 441 and 442, respectively, for memory data and Ethernet communication data input and output in the legacy virtual machine 410.

Therefore, the present disclosure proposes a scheme for improving the system of FIG. 4. That is, unlike FIG. 4, virtual machines are classified into a server virtual machine and guest virtual machines for inputting and outputting various memory data and communication data not in the guest virtual machines but in the server virtual machine. This will be described with reference to FIG. 5 and subsequent figures.

FIG. 5 is a view showing an example of a system driven in a signal processing device according to an embodiment of the present disclosure.

Referring to the figure, the system 500 of FIG. 5 illustrates that the first virtual machine 520, which is a server virtual machine, the second virtual machine 530, which is a guest virtual machine, and the third virtual machine 540, which is a guest virtual machine, are executed on the hypervisor 505 in the processor 175 of the signal processing device 170.

The second virtual machine 530 may be a virtual machine for the cluster display 180a, and the third virtual machine 540 may be a virtual machine for the AVN display 180b.

That is, the second virtual machine 530 and the third virtual machine 540 may be operated for image rendering of the cluster display 180a and the AVN display 180b, respectively.

Meanwhile, the system 50 driven in the signal processing device 170 of FIG. 5 illustrates that a legacy virtual machine 510 is also executed on the hypervisor 505 in the processor 175.

The legacy virtual machine 510 may include an interface 511 for data communication with the memory 140 and Ethernet communication.

The figure illustrates that the interface 511 is a physical device driver; however, various modifications are possible.

Meanwhile, the legacy virtual machine 510 may further include a virtio-backend interface 512 for data communication with the second and third virtual machines 530 and 540.

The first virtual machine 520 may include an interface 521 for input and output of audio data, radio data, USB data, and wireless communication data and an input and output server interface 522 for data communication with the guest virtual machines.

That is, the first virtual machine 520, which is a server virtual machine, may provide inputs/outputs (I/O) difficult to virtualize with standard virtualization technology (VirtIO) to a plurality of guest virtual machines, such as the second and third virtual machines 530 and 540.

Meanwhile, the first virtual machine 520, which is a server virtual machine, may control radio data and audio data at a supervisor level, and may provide the data to a plurality of guest virtual machines, such as the second and third virtual machines 530 and 540.

Meanwhile, the first virtual machine 520, which is a server virtual machine, may process vehicle data, sensor data, and surroundings-of-vehicle information, and may provide the processed data or information to a plurality of guest virtual machines, such as the second and third virtual machines 530 and 540.

Meanwhile, the first virtual machine 520 may provide supervisory services, such as processing of vehicle data and audio routing management.

Next, the second virtual machine 530 may include an input and output client interface 532 for data communication with the first virtual machine 520 and APIs 533 configured to control the input and output client interface 532.

In addition, the second virtual machine 530 may include a virtio-backend interface for data communication with the legacy virtual machine 510.

The second virtual machine 530 may receive memory data by communication with the memory 140 or Ethernet data by Ethernet communication from the virtio-backend interface 512 of the legacy virtual machine 510 through the virtio-backend interface.

Next, the third virtual machine 540 may include an input and output client interface 542 for data communication with the first virtual machine 520 and APIs 543 configured to control the input and output client interface 542.

In addition, the third virtual machine 540 may include a virtio-backend interface for data communication with the legacy virtual machine 510.

The third virtual machine 540 may receive memory data by communication with the memory 140 or Ethernet data by Ethernet communication from the virtio-backend interface 512 of the legacy virtual machine 510 through the virtio-backend interface.

Meanwhile, the legacy virtual machine 510 may be provided in the first virtual machine 520, unlike FIG. 5.

In the system 500, CAN communication data are input and output only in the first virtual machine 520, but may be provided to a plurality of guest virtual machines, such as the second and third virtual machines 530 and 540, through data processing in the first virtual machine 520. Consequently, 1:N data communication by processing of the first virtual machine 520 may be achieved.

Also, in the system 500 of FIG. 5, audio data, radio data, USB data, and wireless communication data are input and output only in the first virtual machine 520, but may be provided to a plurality of guest virtual machines, such as the second and third virtual machines 530 and 540, through data processing in the first virtual machine 520. Consequently, 1:N data communication by processing of the first virtual machine 520 may be achieved.

Also, in the system 500 of FIG. 5, touch input to the first display 180a or the second display 180b is input only to the first virtual machine 520 and is not input to the second virtual machine 530 and the third virtual machine 540. Information regarding the touch input is transmitted to the second virtual machine 530 or the third virtual machine 540.

Consequently, the touch input may be rapidly and accurately processed. In addition, the touch input may be rapidly and accurately processed even though the number of virtual machines that are driven is increased.

Meanwhile, in the system 500 of FIG. 5, the second and third virtual machines 530 and 540 may be operated based on different operating systems.

For example, the second virtual machine 530 may be operated based on a Linux OS, and the third virtual machine 540 may be operated based on a Web OS.

In the first virtual machine 520, the shared memory 508 based on the hypervisor 505 is set for data sharing, even though the second and third virtual machines 530 and 540 are operated based on different operating systems. Even though the second and third virtual machines 530 and 540 are operated based on different operating systems, therefore, the same data or the same images may be shared in a synchronized state. Eventually, the plurality of displays 180a and 180b may display the same data or the same images in a synchronized state.

Meanwhile, the first virtual machine 520 transmits information regarding the touch input to the second virtual machine 530 or the third virtual machine 540 even though the second and third virtual machines 530 and 540 are operated based on different operating systems. Consequently, the touch input may be rapidly and accurately processed even though the second and third virtual machines 530 and 540 are operated based on different operating systems (OS).

Meanwhile, the first virtual machine 520 may include a display manager 527 configured to control overlays displayed on the first display 180a and the second display 180b through the second and third virtual machines 530 and 540 and a display layer server 529.

The display layer server 529 may receive a first overlay provided by the second virtual machine 530 and a second overlay provided by the third virtual machine 540.

Meanwhile, the display layer server 529 may transmit a virtual overlay, which is different from the first overlay or the second overlay, to at least one of the second virtual machine 530 or the third virtual machine 540.

Meanwhile, the display manager 527 in the first virtual machine 520 may receive the first overlay provided by the second virtual machine 530 and the second overlay provided by the third virtual machine 540 through the display layer server 529.

The display manager 527 in the first virtual machine 520 may be configured to transmit the virtual overlay, which is different from the first overlay or the second overlay, to at least one of the second virtual machine 530 or the third virtual machine 540 through the display layer server 529.

In response thereto, the second virtual machine 530 may be configured to combine and display the first overlay and the virtual overlay on the first display 180a.

In addition, the third virtual machine 540 may be configured to combine and display the second overlay and the virtual overlay on the second display 180b.

Meanwhile, the first virtual machine 520 may include an input manager 524 configured to receive an input signal from the outside. At this time, the input signal may be an input signal from a predetermined button (start button) in the vehicle, a touch input signal, or a voice input signal.

For example, the input manager 524 in the first virtual machine 520 may receive touch input from the first display 180a or the second display 180b.

Meanwhile, the first virtual machine 520 may include a touch server 528 configured to transmit information regarding the touch input related to the touch input from the first display 180a or the second display 180b to the second virtual machine 530 or the third virtual machine 540.

For example, in response to touch input corresponding to the first display 180a, the touch server 528 in the first virtual machine 520 may transmit information regarding the touch input to the second virtual machine 530.

Meanwhile, the touch server 528 in the first virtual machine 520 may receive the touch input from the first display 180a or the second display 180b.

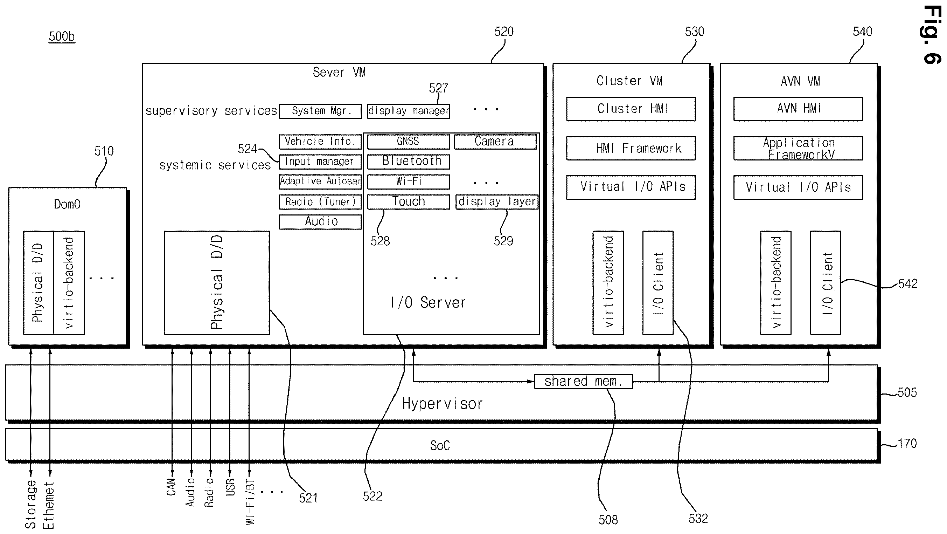

FIG. 6 is a view showing another example of the system driven in the signal processing device according to the embodiment of the present disclosure.

Referring to the figure, in the system 500b driven by the processor 175 in the signal processing device 170, the processor 175 in the signal processing device 170 executes the first to third virtual machines 520 to 540 on the hypervisor 505 in the processor 175, and the first virtual machine 520 in the processor 175 is configured to the shared memory 508 based on the hypervisor 505 for transmission of data to the second and third virtual machines 530 and 540.

For example, information regarding touch input may be illustrated as the data. Consequently, the information regarding touch input may be transmitted to the second virtual machine 530 or the third virtual machine 540. Eventually, the touch input to the first display 180a or the second display 180b may be rapidly and accurately processed. In addition, the touch input may be rapidly and accurately processed even though the number of virtual machines that are driven is increased.

As another example, image data may be illustrated as the data. Consequently, an image may be displayed on the first display 180a or the second display 180b.

Meanwhile, in response to the same image data being shared in the shared memory 508, the plurality of displays 180a and 180b in the vehicle may display the same data in a synchronized state.

As another example, CAN communication data, audio data, radio data, USB data, wireless communication data, or position information data may be illustrated as the data. Consequently, information regarding the data may be displayed on the first display 180a or the second display 180b.

Meanwhile, although not shown in FIG. 6, the legacy virtual machine 510 may transmit memory data from the memory 140 or Ethernet data by Ethernet communication to the second and third virtual machines 530 and 540 using the shared memory 508 based on the hypervisor 505. Consequently, information corresponding to the memory data or the Ethernet data may be displayed on the first display 180a or the second display 180b.

Meanwhile, the first virtual machine 520 in the system 500b of FIG. 6 may include a display manager 527, a display layer server 529, an input manager 524, and a touch server 528, similarly to the first virtual machine 520 in the system 500 of FIG. 5.

Meanwhile, the input and output server interface 522 in the first virtual machine 520 in the system 500b of FIG. 6 may include a display layer server 529 and a touch server 528, unlike FIG. 5.

The operation of the display manager 527, the display layer server 529, the input manager 524, and the touch server 528 is the same to FIG. 5, and therefore a description thereof will be omitted.

Meanwhile, the first virtual machine 520 of FIG. 6 may further include a system manager for overall system control, a vehicle information manager for vehicle information management, an audio manager for audio control, and a radio manager for radio control.

Meanwhile, the input and output server interface 522 in the first virtual machine 520 in the system 500b of FIG. 6 may further include a GNSS server for GPS information input and output, a Bluetooth server for Bluetooth input and output, a Wi-Fi server for Wi-Fi input and output, and a camera server for camera data input and output.

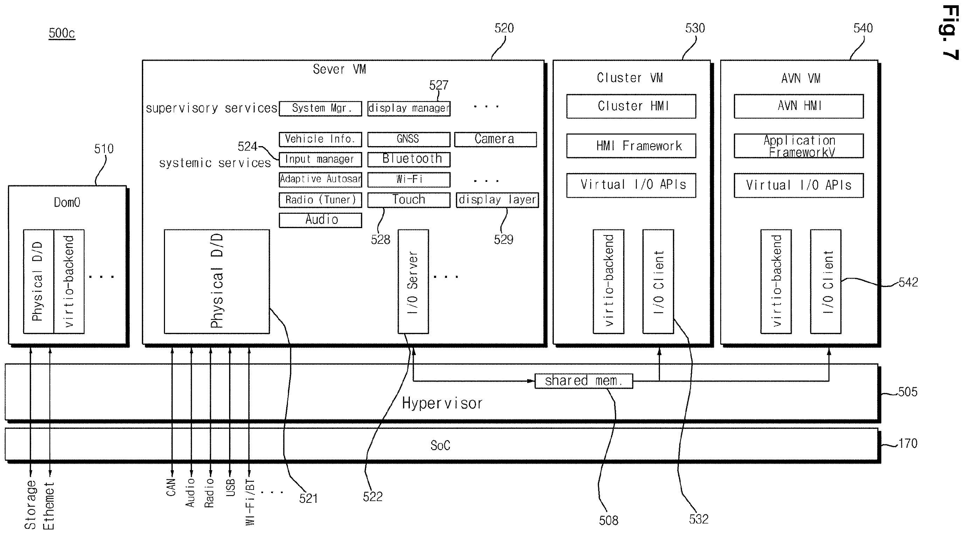

FIG. 7 is a view showing a further example of the system driven in the signal processing device according to the embodiment of the present disclosure.

Referring to the figure, the system 500c driven by the processor 175 in the signal processing device of FIG. 7 is similar to the system 500b of FIG. 6.

That is, like FIG. 6, the processor 175 of FIG. 7 executes the first to third virtual machines 520 to 540 on the hypervisor 505 in the processor 175.

In FIG. 7, however, the display layer server 529 and the touch server 528 may be provided and executed in the first virtual machine 520 outside the input and output server interface 522, unlike FIG. 6.

In addition, the GNSS server for GPS information input and output, the Bluetooth server for Bluetooth input and output, the Wi-Fi server for Wi-Fi input and output, and the camera server for camera data input and output may be provided and executed in the first virtual machine 520 outside the input and output server interface 522, unlike FIG. 6.

That is, the display manager 527, the display layer server 529, the input manager 524, and the touch server 528 may be provided and executed in the first virtual machine 520.

Meanwhile, the input and output server interface 522 in the first virtual machine 520 in the system 500b of FIG. 6 may include a display layer server 529 and a touch server 528, unlike FIG. 5.

The operation of the display manager 527, the display layer server 529, the input manager 524, and the touch server 528 is the same to FIG. 5, and therefore a description thereof will be omitted.

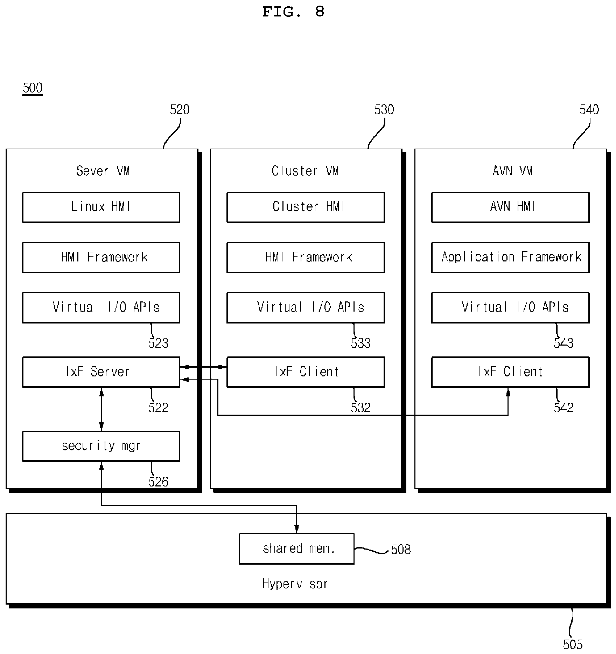

FIGS. 8 to 9B are views referred to in the description of FIG. 5.

First, FIG. 8 illustrates that the first to third virtual machines 520 to 540 are executed on the hypervisor 505 in the processor 175 of the system 500 according to the present disclosure and that the first virtual machine 520 in the processor 175 is configured to the shared memory 508 based on the hypervisor 505 in order to transmit the same data to the second virtual machine 530 and the third virtual machine 540.

Consequently, the plurality of displays 180a and 180b in the vehicle may display the same images in a synchronized state.

Meanwhile, high-speed data communication may be performed between the plurality of virtual machines. Furthermore, high-speed data communication may be performed even though the plurality of virtual machines is driven by different operating systems.

Meanwhile, the first virtual machine 520 in the processor 175 may not allocate memories corresponding in number to the virtual machines but may use a single shared memory 508, not memory allocation in response to transmitting the data processed by the first virtual machine 520 to another virtual machine. Consequently, 1:N data communication using the shared memory 508, not 1:1 data communication, may be performed between the virtual machines.

Meanwhile, the first virtual machine 520 in the processor 175 may include an input and output server interface 522 and a security manager 526.

Meanwhile, the second virtual machine 530 and the third virtual machine 540 may include input and output client interfaces 532 and 542, respectively. Consequently, high-speed data communication between the plurality of virtual machines may be performed using the input and output server interface 522 and the input and output client interfaces 532 and 542.

The input and output server interface 522 in the first virtual machine 520 may receive requests for transmission of the same data from the input and output client interfaces 532 and 542 in the second virtual machine 530 and the third virtual machine 540, and may transmit shared data to the shared memory 508 through the security manager 526 based thereon.

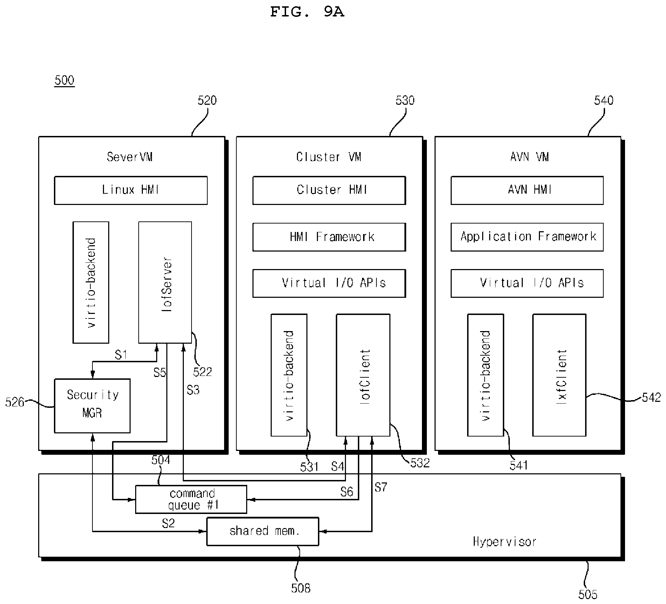

FIG. 9A is a view illustrating transmission of shared data in more detail.

Referring to the figure, in order to transmit shared data, the input and output server interface 522 in the first virtual machine 520 transmits a request for allocation of the shared memory 508 to the security manager 526 (S1).

Subsequently, the security manager 526 may allocate the shared memory 508 using the hypervisor 505 (S2), and may write shared data in the shared memory 508.

Meanwhile, the input and output client interfaces 532 and 542 may transmit a request for connection to the input and output server interface 522 after allocation of the shared memory 508 (S3).

Meanwhile, the input and output server interface 522 transmits information regarding the shared memory 508 including key data to the input and output client interfaces 532 and 542 after allocation of the shared memory 508 (S4). At this time, the key data may be private key data for data access.

Meanwhile, the first virtual machine 520 in the processor 175 may transmit information regarding the shared memory 508 to the second virtual machine 530 and the third virtual machine 540 after setting of the shared memory 508.

Subsequently, the input and output server interface 522 in the first virtual machine 520 is configured to generate a command or a command queue for event processing, other than data, to control distributed processing between the virtual machines (S5).

The figure illustrates that a command queue is generated in a command queue buffer 504 in the hypervisor 505 under control of the input and output server interface 522. However, the present disclosure is not limited thereto, and the command queue may be generated in the first virtual machine 520, not the hypervisor 505, under control of the input and output server interface 522.

Subsequently, the input and output client interfaces 532 and 542 access the command queue buffer 504 to receive the generated command queue or information regarding the command queue (S6).

For example, in response to the commands transmitted to the input and output client interfaces 532 and 542 being the same, the generated command queues may be the same.

As another example, in response to the commands transmitted to the input and output client interfaces 532 and 542 being different from each other, different command queues may be transmitted to the input and output client interfaces 532 and 542.

Subsequently, the input and output client interfaces 532 and 542 may access the shared memory 508 based on the received key data (S5), and may copy or read the shared data from the shared memory 508 (S7).

Particularly, in response to the input and output client interfaces 532 and 542 receiving the same shared data, the input and output client interfaces 532 and 542 may access the shared memory 508 based on the same command queues and the same key data (S5), and may copy or read the shared data from the shared memory 508.

Consequently, the second virtual machine 530 and the third virtual machine 540 may access the shared memory 508, and may eventually share the shared data.

For example, in the case in which the shared data are image data, the second virtual machine 530 and the third virtual machine 540 may share the image data, and eventually the plurality of displays 180a and 180b in the vehicle may display the same shared images in a synchronized state.

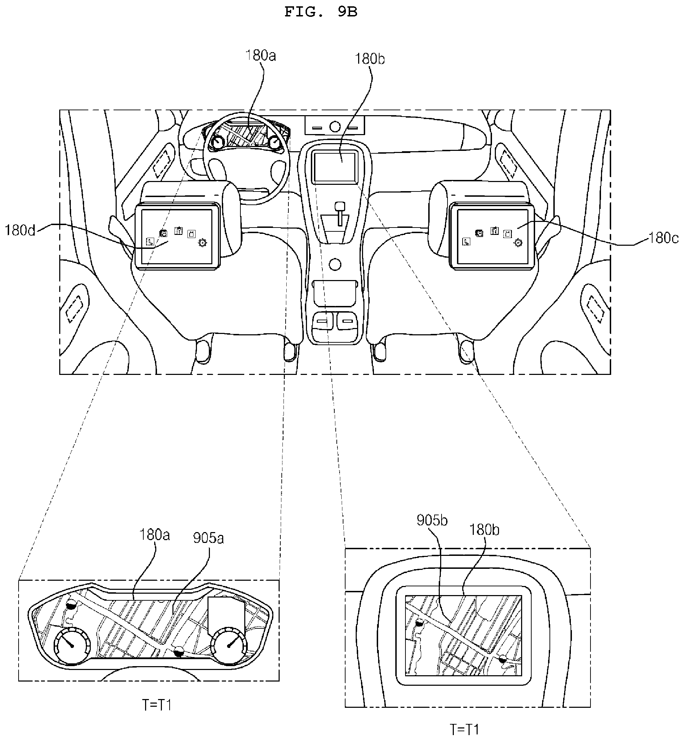

FIG. 9B illustrates that, by the system 500 of FIG. 9A, the second virtual machine 530 displays image data received through the shared memory 508 on the first display 180a, and the third virtual machine 540 displays image data received through the shared memory 508 on the second display 180b.

FIG. 9B illustrates that an image 905a displayed on the first display 180a and an image 905b displayed on the second display 180b are synchronized, whereby the same images 905a and 905b are displayed at the time of T1.

That is, image data processed by the first virtual machine 520 in the processor 175 are transmitted to the second virtual machine 530 and the third virtual machine 540 through the shared memory 508, and the first image 905a displayed on the first display 180a and the second image 905b displayed on the second display 180b based on the image data may be the same. Consequently, the plurality of displays 180a and 180b in the vehicle may display the same images in a synchronized state.

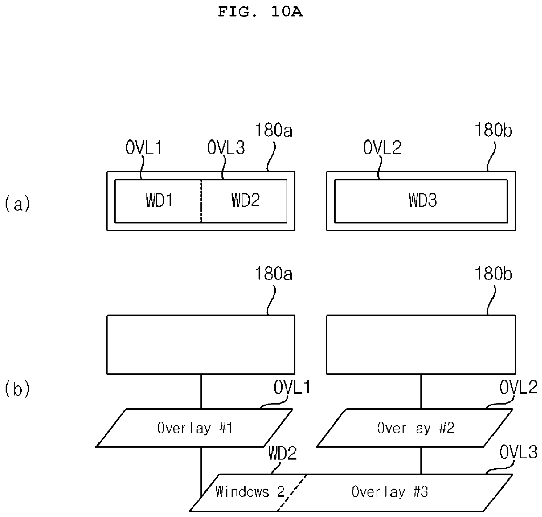

FIGS. 10A to 15D are views referred to in the description of FIGS. 5 to 7.

First, FIG. 10A illustrates that a first overlay OVL1 and a third overlay OVL3 are displayed on the first display 180a and a second overlay OVL2 is display on the second display 180b.

In particular, a first overlay OVL1 corresponding to the entire area of the first display 180a and a third overlay OVL3 corresponding to a right area in the second display 180b, the third overlay being a lower layer of the first overlay OVL1, is displayed on the first display 180a.

Consequently, a first window WD1 is displayed in a left area in the first display 180a, and a second window WD2 is displayed in a right area in the first display 180a.

Meanwhile, a second overlay OVL2 corresponding to the entire area of the second display 180b and a third overlay OVL3 corresponding to a lower layer of the second overlay OVL2 are displayed on the second display 180b.

Consequently, a third window ED3 is displayed on the second display 180b.

Meanwhile, in connection with FIG. 10A, the first virtual machine 520 may receive the first overlay OVL1 provided by the second virtual machine 530 and the second overlay OVL2 provided by the third virtual machine 540.

The first virtual machine 520 may transmit the third overlay OVL3, which is a virtual overlay different from the first overlay OVL1 or the second overlay OVL2, to the second virtual machine 530 or the third virtual machine 540.

Consequently, the second virtual machine 530 may be configured to display the first window WD1 and the second window WD2 on the first display 180a as the result of disposition of the first overlay OVL1 on the third overlay OVL3.

The third virtual machine 540 may be configured to display the third window WD3 on the second display 180b as the result of disposition of the second overlay OVL2 on the third overlay OVL3.

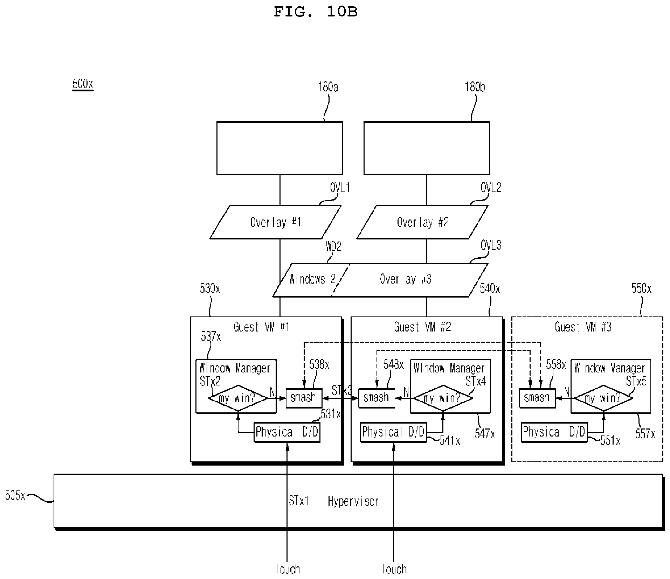

FIG. 10B is a view showing processing of touch input in a system 500x related to the present disclosure.

Referring to the figure, as shown in FIG. 10A, in response to touch input to the second window WD2 in the state in which the first window WD1 and the second window WD2 are displayed on the first display 180a and the third window WD3 is displayed on the second display 180b, a first guest virtual machine 530x configured to control the first display 180a on a hypervisor 505x receives the touch input through a physical device driver 531x (STx1).

A window manager 537x in the first guest virtual machine 530x determines whether the second window WD2 to which the touch has been input is a window corresponding to the first display 180a (STx2).

When the second window WD2 does not correspond to the first display 180a, the window manager 537x in the first guest virtual machine 530x tosses the touch input to a second guest virtual machine 540x through a smash (STx3).

A window manager 547x in the second guest virtual machine 540x determines whether the second window WD2 is a window corresponding to the second display 180b (STx4).

If so, the second guest virtual machine 540x performs an operation corresponding to the touch input.

Meanwhile, in the scheme of FIG. 10B, there is a disadvantage in that, as the number of guest virtual machines is increased, it takes considerable time to determine which display the window to which the touch has been input corresponds to.

For example, when the window to which the touch has been input is a window corresponding to the third display in the state in which three guest virtual machines are executed, the first guest virtual machine 530x, the second guest virtual machine 540x, and a third guest virtual machine 550x sequentially determine whether the window to which the touch has been input is a window corresponding to the third display 180c (STx5).

That is, there is a disadvantage in that time necessary to determine the window corresponding to the touch input is increased in proportion to the number of guest virtual machines.

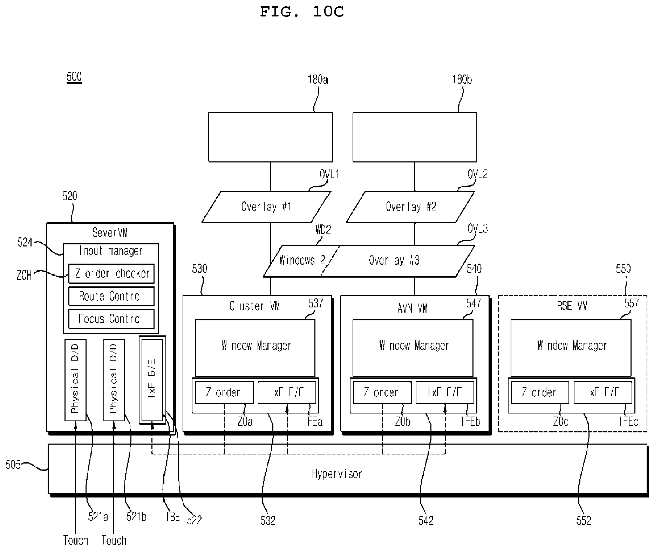

Therefore, the embodiment of the present disclosure proposes a scheme for rapidly and accurately processing touch input. This will be described with reference to FIG. 10C.

Meanwhile, in response to touch input to the third window WD3 in the state in which the first window WD1 and the second window WD2 are displayed on the first display 180a and the third window WD3 is displayed on the second display 180b, the second guest virtual machine 540x configured to control the second display 180b on the hypervisor 505x receives the touch input through a physical device driver 541x.

As described above, there is a disadvantage in that each guest virtual machine includes a physical device driver in order to receive the touch input.

FIG. 10C is a view showing processing of touch input in the system 500 according to the embodiment of the present disclosure.

Referring to the figure, the processor 175 in the signal processing device 170 according to the embodiment of the present disclosure executes the first virtual machine 520, which corresponds to a server virtual machine, and the second virtual machine 530 and the third virtual machine 540, which correspond to guest virtual machines, on the hypervisor 505, and the first virtual machine 520 in the processor 175 receives touch input to the first display 180a or the second display 180, and transmits information regarding the touch input to the second virtual machine 530 or the third virtual machine 540.

The touch input is not input to the second virtual machine 530 and the third virtual machine 540.

To this end, it is preferable for the first virtual machine 520 in the processor 175 to include at least one physical device driver 521a and 521b configured to receive the touch input and for each of the second virtual machine 530 and the third virtual machine 540 to include no physical device driver.

Meanwhile, the first virtual machine 520 in the processor 175 may include an input manager 524 configured to process the received touch input.

Meanwhile, the information regarding the touch input may be extracted through analysis of the touch input by the input manager 524.

To this end, the input manager 524 may include a checker ZCH configured to check the z-axis order of overlays or the order of overlays, a route control manager configured to control the route of the touch input, and a focus control manager configured to perform focus control.

Meanwhile, the input manager 524 in the first virtual machine 520 may detect a window or overlay corresponding to the touch input, and may be configured to transmit the information regarding the touch input to a guest virtual machine corresponding to the detected window or overlay, e.g. the second virtual machine 530 or the third virtual machine 540.

For example, the information regarding the touch input may be transmitted to the second virtual machine 530 or the third virtual machine 540 via a backend interface IBE in the first virtual machine 520.

Meanwhile, the information regarding the touch input may include position information of the touch input and z-axis information of the touch input.

Consequently, the position information of the touch input, which is one piece of the information regarding the touch input, may be transmitted to a frontend interface IFEa in the second virtual machine 530 or a frontend interface IFEb in the third virtual machine 540, and the z-axis information of the touch input, which is one piece of the information regarding the touch input, may be transmitted to a z-axis processor Zoa in the second virtual machine 530 or a z-axis processor Zob in the third virtual machine 540.

In response to touch input corresponding to an overlay provided by the third virtual machine 540, among a plurality of overlays displayed on the first display 180a, the first virtual machine 520 in the processor 175 may transmit the information regarding the touch input not to the second virtual machine 530 but to the third virtual machine 540. Consequently, the touch input may be rapidly and accurately processed.

For example, in response to touch input to the second window WD2, the first virtual machine 520 may extract the position information and the z-axis information of the touch input, and may transmit the information regarding the touch input including the position information and the z-axis information of the touch input to the third virtual machine 540.

Consequently, the frontend interface IFEb and the z-axis processor Zob in the third virtual machine 540 may receive the position information and the z-axis information of the touch input, and may transmit the position information and the z-axis information of the touch input to a window manager 547 therein.

The window manager 547 in the third virtual machine 540 may change a window or an overlay based on the received position information and z-axis information. Consequently, the touch input may be rapidly and accurately processed.

Meanwhile, in response to touch input corresponding to an overlay provided by the second virtual machine 530, among a plurality of overlays displayed on the first display 180a, the first virtual machine 520 in the processor 175 may transmit the information regarding the touch input to the second virtual machine 530. Consequently, the touch input may be rapidly and accurately processed.

For example, in response to touch input to the first window WD1 or the first overlay OVL1, the first virtual machine 520 may extract the position information and the z-axis information of the touch input, and may transmit the information regarding the touch input including the position information and the z-axis information of the touch input to the second virtual machine 530.

Consequently, the frontend interface IFEa and the z-axis processor Zoa in the second virtual machine 530 may receive the position information and the z-axis information of the touch input, and may transmit the position information and the z-axis information of the touch input to a window manager 537 therein.

The window manager 537 in the second virtual machine 530 may change a window or an overlay based on the received position information and z-axis information. Consequently, the touch input may be rapidly and accurately processed.

Meanwhile, in response to touch input corresponding to an overlay provided by the second virtual machine 530, among a plurality of overlays displayed on the second display 180b, the first virtual machine 520 in the processor 175 may transmit the information regarding the touch input to the second virtual machine 530. Consequently, the touch input may be rapidly and accurately processed.

Meanwhile, in response to touch input corresponding to an overlay provided by the third virtual machine 540, among a plurality of overlays displayed on the second display 180b, the first virtual machine 520 in the processor 175 may transmit the information regarding the touch input to the third virtual machine 540. Consequently, the touch input may be rapidly and accurately processed.

For example, in response to touch input to the third overlay OVL3, the first virtual machine 520 may extract the position information and the z-axis information of the touch input, and may transmit the information regarding the touch input including the position information and the z-axis information of the touch input to the third virtual machine 540.

Consequently, the frontend interface IFEb and the z-axis processor Zob in the third virtual machine 540 may receive the position information and the z-axis information of the touch input, and may transmit the position information and the z-axis information of the touch input to the window manager 547 therein.

The window manager 547 in the third virtual machine 540 may change an overlay based on the received position information and z-axis information. Consequently, the touch input may be rapidly and accurately processed.

Meanwhile, the first virtual machine 520 in the processor 175 may detect an overlay corresponding to the touch input, and may transmit the information regarding the touch input to a virtual machine providing the detected overlay, which is one of the second virtual machine 530 and the third virtual machine 540. Consequently, the touch input may be rapidly and accurately processed.

Meanwhile, in processing of the touch input in the system 500 according to the embodiment of the present disclosure, the touch input may be rapidly and accurately processed irrespective of the number of guest virtual machines.

For example, in response to touch input to an overlay corresponding to the third display 180c in the state in which a fourth virtual machine 550, which is a guest virtual machine corresponding to the third display 180c, is executed in the processor 175, the first virtual machine 520 in the processor 175 directly transmits the information regarding the touch input to the fourth virtual machine 550 without transmission of the information regarding the touch input to the second virtual machine 530 and the third virtual machine 540.

Consequently, the touch input may be rapidly and accurately processed even though the number of guest virtual machines is increased and the number of overlays is increased.

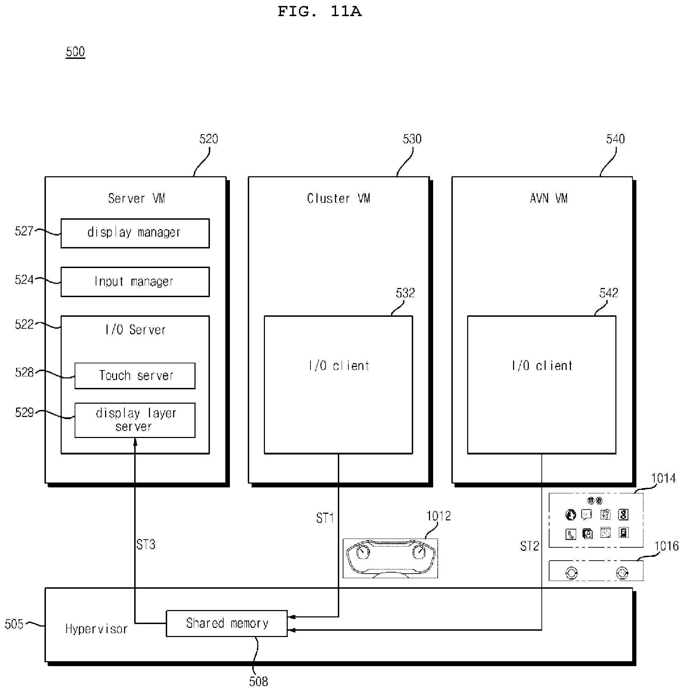

Meanwhile, the first virtual machine 520 may be configured to transmit a composite overlay generated by combining an overlay from the second virtual machine 530 and at least one overlay from the third virtual machine 540 with each other to the second virtual machine 530 or the third virtual machine 540. This will be described with reference to FIG. 11A and subsequent figures.

FIGS. 11A to 15C are views referred to in order to describe processing of touch input according to the embodiment of the present disclosure.

FIG. 11A illustrates that the second virtual machine 530 and the third virtual machine 540 generate overlays and transmit the generated overlays to the first virtual machine 520 through the input and output client interfaces 532 and 542, respectively.

The second virtual machine 530 may generate a first overlay 1012, which is a physical overlay. Specifically, the window manager 537 in the second virtual machine 530 may generate a first overlay 1012, which is a physical overlay.

The input and output client interface 532 in the second virtual machine 530 may write the first overlay 1012 in the shared memory 508 (ST1), and the first virtual machine 520 may receive the first overlay 1012 written in the shared memory 508 using the received buffer index (ST3) .

The third virtual machine 540 may generate a second overlay 1014 and a third overlay 1016, which are physical overlays. Specifically, the window manager 547 in the third virtual machine 540 may generate a second overlay 1014 and a third overlay 1016, which are physical overlays.

The input and output client interface 542 in the third virtual machine 540 may write the second overlay 1014 and the third overlay 1016 in the shared memory 508 (ST2), and the first virtual machine 520 may receive the second overlay 1014 and the third overlay 1016 written in the shared memory 508 using the received buffer index (ST3) .

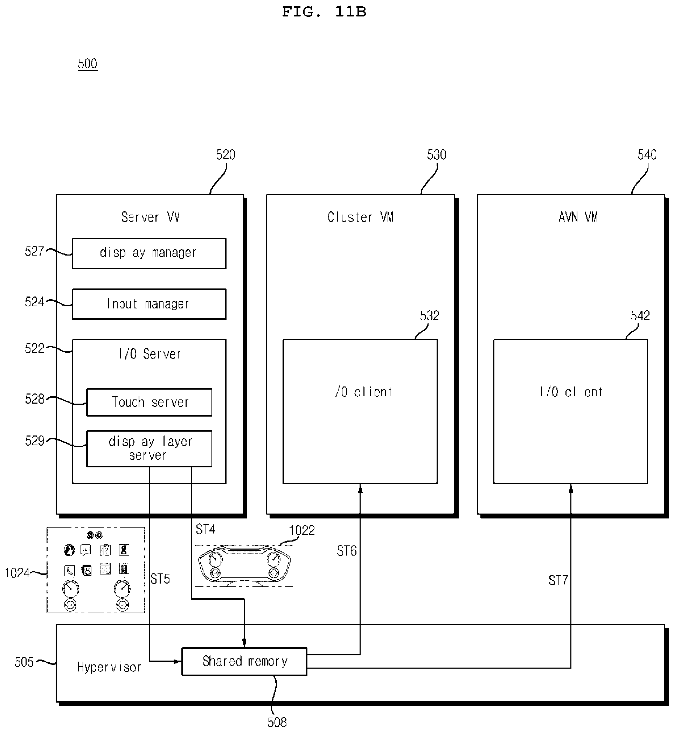

FIG. 11B illustrates that a composite overlay generated by the first virtual machine 520 is transmitted to the second virtual machine 530 and the third virtual machine 540.

Referring to the figure, the first virtual machine 520 may generate a first composite overlay 1022 using the received first overlay 1012 and third overlay 1016.

Specifically, the display manager 527 or the display layer server 529 in the first virtual machine 520 may generate a first composite overlay 1022 using the received first overlay 1012 and third overlay 1016.

The input and output server interface 522 in the first virtual machine 520 may write the first composite overlay 1022 in the shared memory 508 (ST4), and the second virtual machine 530 may receive the first composite overlay 1022 written in the shared memory 508 using the received buffer index (ST6).

The first virtual machine 520 may generate a second composite overlay 1024 using the received first to third overlays 1012, 1014, and 1016.

Specifically, the display manager 527 or the display layer server 529 in the first virtual machine 520 may generate a second composite overlay 1024 using the received first to third overlays 1012, 1014, and 1016.

The input and output server interface 522 in the first virtual machine 520 may write the second composite overlay 1024 in the shared memory 508 (ST5), and the third virtual machine 540 may receive the second composite overlay 1024 written in the shared memory 508 using the received buffer index (ST7).

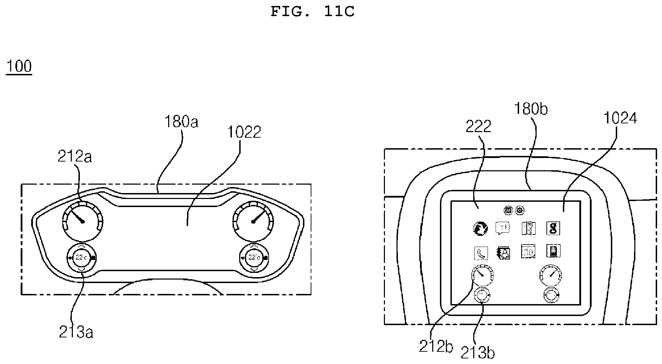

FIG. 11C is a view showing the first composite overlay 1022 and the second composite overlay 1024.

The first composite overlay 1022 may be displayed on the first display 180a, and a vehicle speed indicator 212a and an in-vehicle temperature indicator 213a may be displayed in the first composite overlay 1022.

The second composite overlay 1024 may be displayed on the second display 180b, and a plurality of applications, a vehicle speed indicator 212b, and an in-vehicle temperature indicator 213b may be displayed in the second composite overlay 1024.

FIG. 12A illustrates that touch input 1101 is performed to the in-vehicle temperature indicator 213a in the first composite overlay 1022 in the state in which the first composite overlay 1022 is displayed on the first display 180a and the second composite overlay 1024 is displayed on the second display 180b.

In the embodiment of the present disclosure, in order to rapidly process the touch input, a physical device driver is provided only in the first virtual machine 520 and is not provided in the second virtual machine 530 and the third virtual machine 540.

Consequently, the touch input 1101 to the first display 180a is transmitted to the first virtual machine 520, not the second virtual machine 530.

Meanwhile, in response to the touch input 1101 corresponding to the overlay provided by the third virtual machine 540, among a plurality of overlays displayed on the second display 180b, the first virtual machine 520 may transmit information regarding the touch input to the third virtual machine 540.

To this end, the first virtual machine 520 may extract coordinate information of the touch input 1101.

Meanwhile, the first virtual machine 520 may be configured to store the coordinate information of the touch input 1101 in the shared memory 508. Consequently, the touch input may be rapidly and accurately processed.

Meanwhile, the first virtual machine 520 may transmit a buffer index regarding the shared memory 508 to the second virtual machine 530 or the third virtual machine 540, and the second virtual machine 530 or the third virtual machine 540 may read the coordinate information of the touch input written in the shared memory 508 based on the received buffer index.

Specifically, the input and output server interface 522 in the first virtual machine 520 may be configured to store the coordinate information of the touch input in the shared memory 508, and the input and output client interface 532 or 542 in the second virtual machine 530 or the third virtual machine 540 may read the coordinate information of the touch input written in the shared memory 508. Consequently, the touch input may be rapidly and accurately processed.

In FIG. 12A, since the touch input 1101 corresponds to the overlay provided by the third virtual machine 540, among the plurality of overlays displayed on the second display 180b, the first virtual machine 520 may write the coordinate information of the touch input in the shared memory 508, and the third virtual machine 540 may read the coordinate information of the touch input written in the shared memory 508 based on the received buffer index.

Meanwhile, in response to information regarding the touch input corresponding to at least one overlay from the third virtual machine 540, the first virtual machine 520 may be configured to transmit the information regarding the touch input to the third virtual machine 540, and the third virtual machine 540 may change the at least one overlay based on the touch input and may be configured to display the changed overlay on the second display 180b. Consequently, the changed overlay corresponding to the touch input may be rapidly and accurately displayed.

Meanwhile, the third virtual machine 540 may transmit the changed overlay to the first virtual machine 520, and the first virtual machine 520 may be configured to transmit the changed overlay to the second virtual machine 530. Consequently, the changed overlay corresponding to the touch input may be rapidly and accurately displayed.

Meanwhile, in response to information regarding the touch input corresponding to at least one overlay from the third virtual machine 540 while corresponding to the operation of a hardware device in the vehicle, the first virtual machine 520 may be configured to transmit the information regarding the touch input to the third virtual machine 540, and may be configured to operate the hardware device in the vehicle based on the touch input. Consequently, the operation of the hardware device corresponding to the touch input may be rapidly and accurately performed.

Meanwhile, in response to information regarding the touch input corresponding to the overlay from the second virtual machine 530, the first virtual machine 520 may be configured to transmit the information regarding the touch input to the second virtual machine 530, and the second virtual machine 530 may be configured to change the overlay based on the touch input and the changed overlay is displayed on the second display 180b. Consequently, the changed overlay corresponding to the touch input may be rapidly and accurately displayed.

Meanwhile, the second virtual machine 530 may transmit the changed overlay to the first virtual machine 520, and the first virtual machine 520 may be configured to transmit the changed overlay to the third virtual machine 540. Consequently, the changed overlay corresponding to the touch input may be rapidly and accurately displayed.

Meanwhile, the processor 175 may further execute the fourth virtual machine 550 operated for the third display 180c on the hypervisor 505 in the processor 175, and the first virtual machine 520 in the processor 175 may receive touch input to any one of the first display 180a to the third display 180c and may transmit information regarding the received touch input to any one of the second virtual machine 530 to the fourth virtual machine 550. Consequently, the touch input may be rapidly and accurately processed.

Meanwhile, the first virtual machine 520 may receive and process wheel speed sensor data of the vehicle 100, and may transmit an overlay indicating the processed wheel speed sensor data or speed information corresponding to the processed wheel speed sensor data to at least one of the second virtual machine 530 or the third virtual machine 540. Consequently, the wheel speed sensor data of the vehicle may be shared by at least one virtual machine.

FIG. 12B is a view describing signal processing for the touch input of FIG. 12A.

Referring to the figure, the input and output server interface 522 in the first virtual machine 520 receives the touch input through the physical device driver for touch input reception.

Specifically, the touch input is transmitted to the touch server 528 in the input and output server interface 522 in the first virtual machine 520 (STa1).

Subsequently, the touch server 528 transmits the touch input to the display manager 527 and a hardware manager 523 (STa2).

The hardware manager 523 may control an air conditioner in the vehicle such that the temperature becomes 21°C, which is lower than the current temperature, 22°C, since the touch input is an input corresponding to temperature decrease in the in-vehicle temperature indicator 213a.

Meanwhile, the display manager 527 may perform control such that temperature information of 21°C, which is lower than the current temperature, 22°C, is displayed in the in-vehicle temperature indicator 213a.

Consequently, the display manager 527 or the display layer server 529 may generate an in-vehicle temperature indicator having changed temperature information (STa3).

The input and output server interface 522 in the first virtual machine 520 may write a first composite overlay including the in-vehicle temperature indicator having changed temperature information in the shared memory 508 (STa4), and the second virtual machine 530 may receive the first composite overlay written in the shared memory 508 using the received buffer index (STa5).

As shown in FIG. 12C, therefore, the first composite overlay 1022 having changed temperature information may be displayed on the first display 180a.

Meanwhile, the first virtual machine 520 may change temperature information in a second composite overlay in response to the change of the temperature information of the first composite overlay.

The first virtual machine 520 may write the second composite overlay having changed temperature information in the shared memory 508 (STa4), and the third virtual machine 540 may receive the second composite overlay written in the shared memory 508 using the received buffer index.

As shown in FIG. 12C, therefore, the second composite overlay 1024 having changed temperature information may be displayed on the second display 180b.

FIG. 12D illustrates that touch input 1101 is performed to the in-vehicle temperature indicator 213b in the second display 180b in the state in which the first composite overlay 1022 is displayed on the first display 180a and the second composite overlay 1024 is displayed on the second display 180b, unlike FIG. 12A.

In the embodiment of the present disclosure, in order to rapidly process the touch input, a physical device driver is provided only in the first virtual machine 520 and is not provided in the second virtual machine 530 and the third virtual machine 540.

Consequently, the touch input 1101 to the first display 180a is transmitted to the first virtual machine 520, not the third virtual machine 540.

Specifically, the touch input is transmitted to the touch server 528 in the input and output server interface 522 in the first virtual machine 520.

Subsequently, the touch server 528 transmits the touch input to the display manager 527 and the hardware manager 523.

The hardware manager 523 may control the air conditioner in the vehicle such that the temperature becomes 21°C, which is lower than the current temperature, 22°C, since the touch input is an input corresponding to temperature decrease in the in-vehicle temperature indicator 213b.

Meanwhile, the display manager 527 may perform control such that temperature information of 21°C, which is lower than the current temperature, 22°C, is displayed in the in-vehicle temperature indicator 213b.

Consequently, the display manager 527 or the display layer server 529 may generate an in-vehicle temperature indicator having changed temperature information.

The input and output server interface 522 in the first virtual machine 520 may write a second composite overlay including the in-vehicle temperature indicator having changed temperature information in the shared memory 508 (STa4), and the third virtual machine 540 may receive the second composite overlay written in the shared memory 508 using the received buffer index.

As shown in FIG. 12D, therefore, the first composite overlay 1022 having changed temperature information may be displayed on the second display 180b.

In addition, the first composite overlay 1022 having changed temperature information may be displayed on the first display 180a.

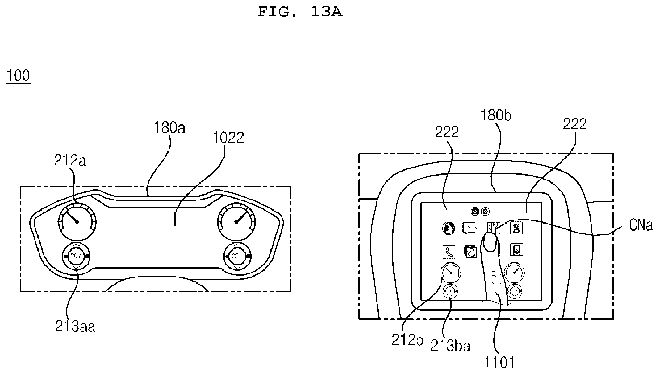

FIG. 13A illustrates that touch input 1101 is performed to a map application ICNa, among the plurality of applications in the second display 180b, in the state in which the first composite overlay 1022 is displayed on the first display 180a and the second composite overlay 1024 is displayed on the second display 180b, unlike FIG. 12A.

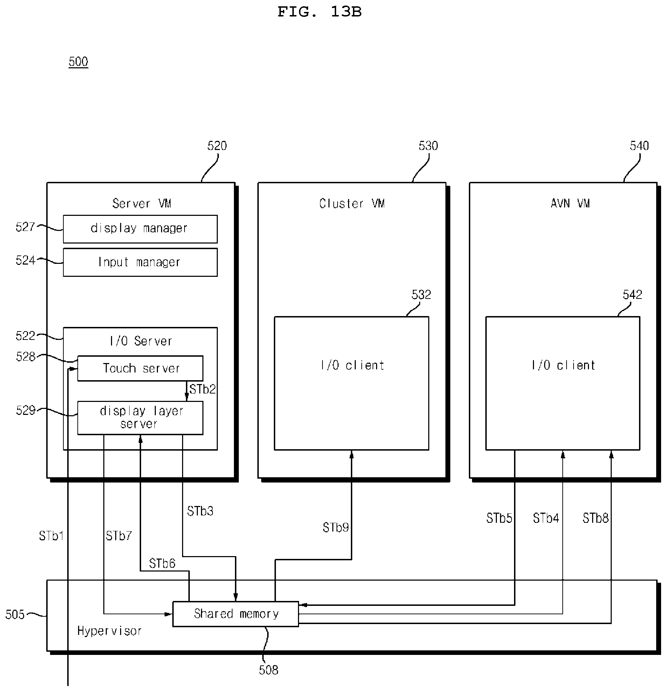

FIG. 13B is a view describing signal processing for the touch input of FIG. 13A.

Referring to the figure, the input and output server interface 522 in the first virtual machine 520 receives the touch input through the physical device driver for touch input reception.

Specifically, the touch input is transmitted to the touch server 528 in the input and output server interface 522 in the first virtual machine 520 (STb1).

Subsequently, the touch server 528 transmits the touch input to the display manager 527 and the display layer server 529 (STb2).

Alternatively, the touch server 528 may extract coordinate information of the touch input, and may transmit the extracted coordinate information of the touch input to the display manager 527 and the display layer server 529 (STb2).

The display manager 527 or the display layer server 529 may be configured to execute the map application ICNa, since the touch input corresponds to execution input of the map application ICNa.

Consequently, the input and output server interface 522 in the first virtual machine 520 may write a request for execution of the map application ICNa or the coordinate information of the touch input in the shared memory 508 (STb3), and the third virtual machine 540 may read the request for execution of the map application ICNa or the coordinate information of the touch input written in the shared memory 508 using the received buffer index (STb4).

The third virtual machine 540 may execute the map application ICNa according to the received request for execution of the map application ICNa or the received coordinate information of the touch input, and may generate a map layer.

The input and output client interface 542 in the third virtual machine 540 may write the map layer in the shared memory 508 (STb5), and the first virtual machine 520 may receive the map layer written in the shared memory 508 using the received buffer index (STb6).

The input and output server interface 522 in the first virtual machine 520 may generate a second composite overlay including the map layer and the vehicle speed indicator.

The input and output server interface 522 in the first virtual machine 520 may write the second composite overlay including the map layer and the vehicle speed indicator in the shared memory 508 (STb7), and the third virtual machine 540 may receive the second composite overlay written in the shared memory 508 using the received buffer index (STb8).

The third virtual machine 540 may be configured to display the second composite overlay including the map layer and the vehicle speed indicator on the second display 180b. Consequently, the touch input may be rapidly and accurately processed.

In addition, the input and output server interface 522 in the first virtual machine 520 may generate a first composite overlay including the map layer and the vehicle speed indicator.

The input and output server interface 522 in the first virtual machine 520 may write the first composite overlay including the map layer and the vehicle speed indicator in the shared memory 508, and the second virtual machine 530 may receive the first composite overlay written in the shared memory 508 using the received buffer index (STb9).

The second virtual machine 530 may be configured to display the first composite overlay including the map layer and the vehicle speed indicator on the first display 180a.

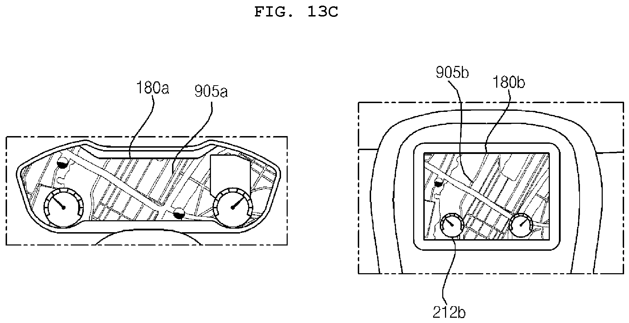

FIG. 13C illustrates that a first composite overlay 905a including the map layer and the vehicle speed indicator is displayed on the first display 180a and a second composite overlay 905b including the map layer and the vehicle speed indicator is displayed on the second display 180b as the result of execution of the map application ICNa.

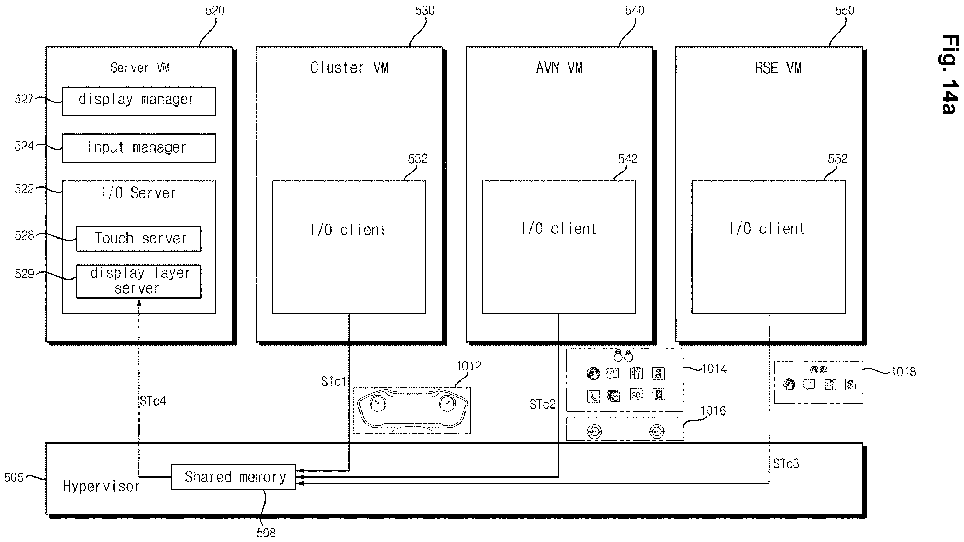

FIG. 14A illustrates that the second virtual machine 530, the third virtual machine 540, and the fourth virtual machine 550 generate overlays and transmit the generated overlays to the first virtual machine 520 through input and output client interfaces 532, 542, and 552, respectively.

The second virtual machine 530 may generate a first overlay 1012, which is a physical overlay. Specifically, the window manager 537 in the second virtual machine 530 may generate a first overlay 1012, which is a physical overlay.

The input and output client interface 532 in the second virtual machine 530 may write the first overlay 1012 in the shared memory 508 (STc1), and the first virtual machine 520 may receive the first overlay 1012 written in the shared memory 508 using the received buffer index (STc4).

The third virtual machine 540 may generate a second overlay 1014 and a third overlay 1016, which are physical overlays. Specifically, the window manager 547 in the third virtual machine 540 may generate a second overlay 1014 and a third overlay 1016, which are physical overlays.

The input and output client interface 542 in the third virtual machine 540 may write the second overlay 1014 and the third overlay 1016 in the shared memory 508 (STc2), and the first virtual machine 520 may receive the second overlay 1014 and the third overlay 1016 written in the shared memory 508 using the received buffer index (STc4).

The fourth virtual machine 550 may generate a fourth overlay 1018, which is a physical overlay. Specifically, a window manager 557 in the fourth virtual machine 550 may generate a fourth overlay 1018, which is a physical overlay.

The input and output client interface 552 in the fourth virtual machine 550 may write the fourth overlay 1018 in the shared memory 508 (STc3), and the first virtual machine 520 may receive the fourth overlay 1018 written in the shared memory 508 using the received buffer index (STc4).

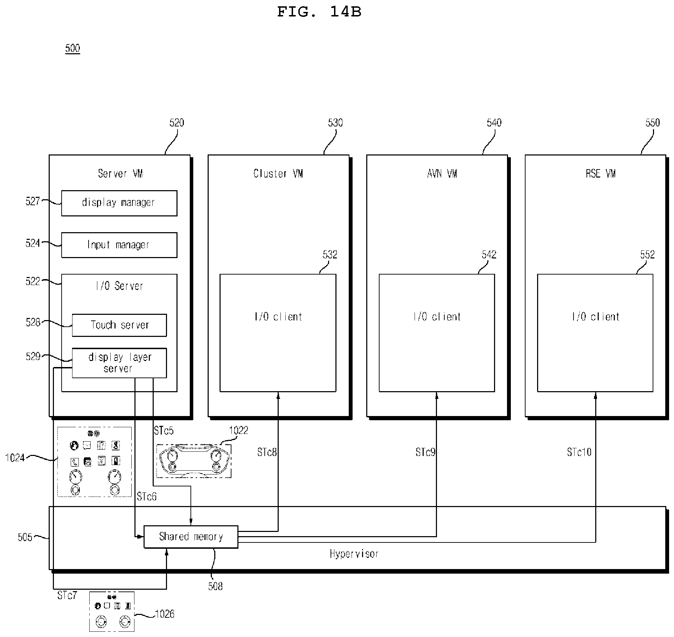

FIG. 14B illustrates that a composite overlay generated by the first virtual machine 520 is transmitted to the second virtual machine 530, the third virtual machine 540, and the fourth virtual machine 550.

Referring to the figure, the first virtual machine 520 may generate a first composite overlay 1022 using the received first overlay 1012 and third overlay 1016.

Specifically, the display manager 527 or the display layer server 529 in the first virtual machine 520 may generate a first composite overlay 1022 using the received first overlay 1012 and third overlay 1016.

The input and output server interface 522 in the first virtual machine 520 may write the first composite overlay 1022 in the shared memory 508 (STc5), and the second virtual machine 530 may receive the first composite overlay 1022 written in the shared memory 508 using the received buffer index (STc8).

The first virtual machine 520 may generate a second composite overlay 1024 using the received first to third overlays 1012, 1014, and 1016.

Specifically, the display manager 527 or the display layer server 529 in the first virtual machine 520 may generate a second composite overlay 1024 using the received first to third overlays 1012, 1014, and 1016.

The input and output server interface 522 in the first virtual machine 520 may write the second composite overlay 1024 in the shared memory 508 (STc6), and the third virtual machine 540 may receive the second composite overlay 1024 written in the shared memory 508 using the received buffer index (STc9).

The first virtual machine 520 may generate a third composite overlay 1026 using the received third overlay 1016 and fourth overlay 1018.

Specifically, the display manager 527 or the display layer server 529 in the first virtual machine 520 may generate a third composite overlay 1026 using the received third overlay 1016 and fourth overlay 1018.

The input and output server interface 522 in the first virtual machine 520 may write the third composite overlay 1026 in the shared memory 508 (STc7), and the fourth virtual machine 550 may receive the third composite overlay 1026 written in the shared memory 508 using the received buffer index (STc10).

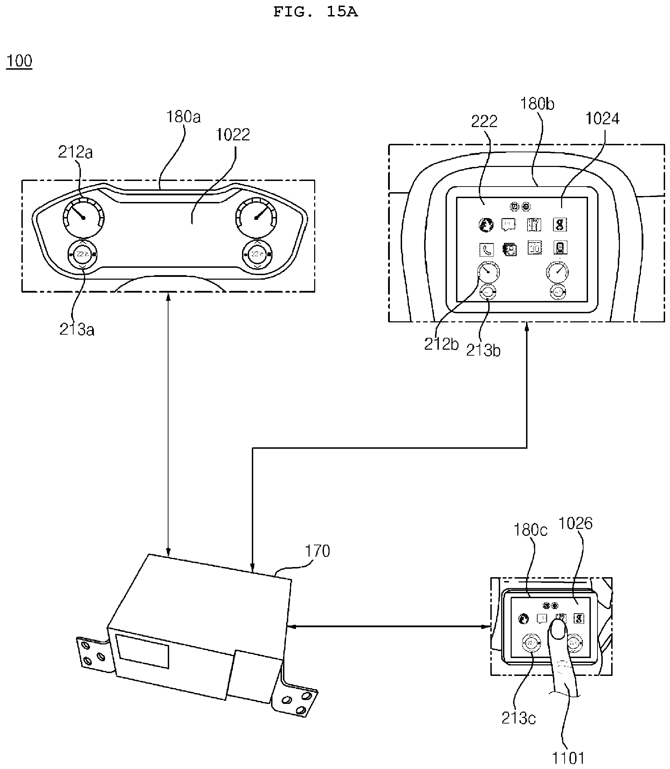

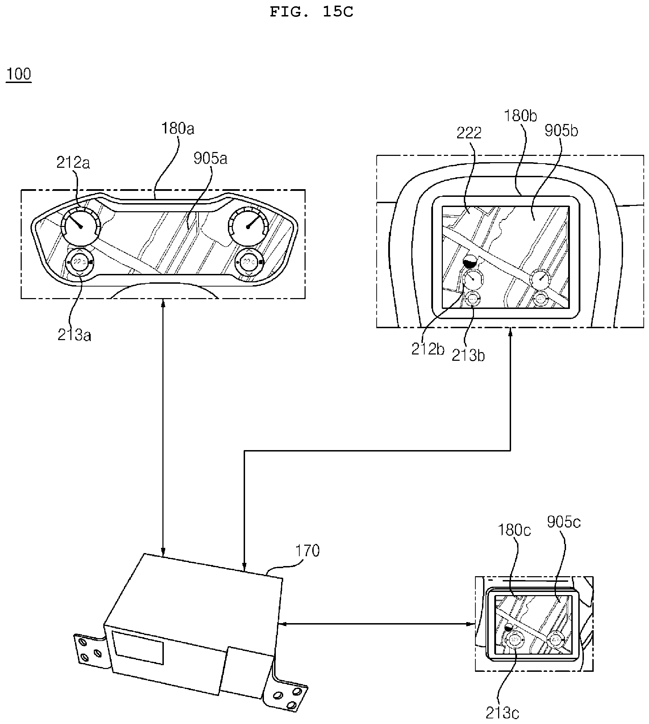

FIG. 15A illustrates the first composite overlay 1022, the second composite overlay 1024, and the third composite overlay 1026.

The first composite overlay 1022 may be displayed on the first display 180a, and a vehicle speed indicator 212a and an in-vehicle temperature indicator 213a may be displayed in the first composite overlay 1022.

The second composite overlay 1024 may be displayed on the second display 180b, and a plurality of applications, a vehicle speed indicator 212b, and an in-vehicle temperature indicator 213b may be displayed in the second composite overlay 1024.

The third composite overlay 1026 may be displayed on the third display 180c, and a plurality of applications and an in-vehicle temperature indicator 213c may be displayed in the third composite overlay 1026.

Meanwhile, FIG. 15A illustrates that touch input 1101 is performed to the in-vehicle temperature indicator 213c in the third composite overlay 1026 in the state in which the first composite overlay 1022 is displayed on the first display 180a, the second composite overlay 1024 is displayed on the second display 180b, and the third composite overlay 1026 is displayed on the third display 180c.

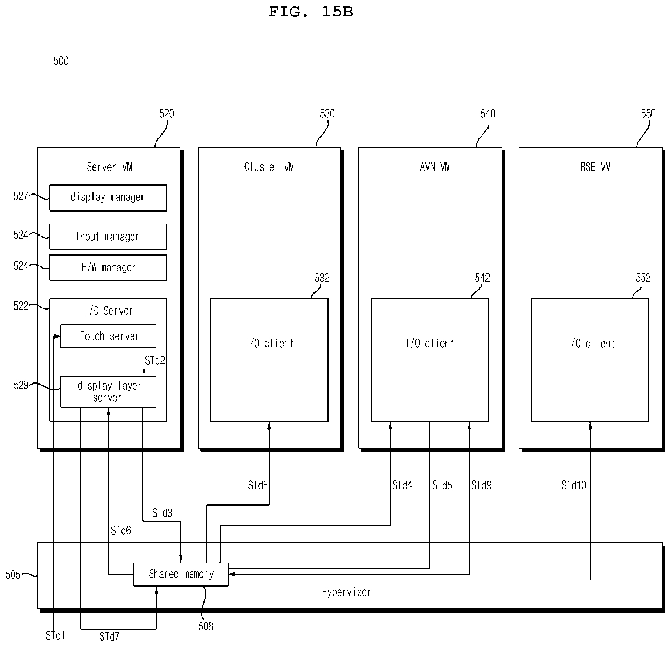

FIG. 15B is a view describing signal processing for the touch input of FIG. 15A.

Referring to the figure, the input and output server interface 522 in the first virtual machine 520 receives the touch input through the physical device driver for touch input reception.

Specifically, the touch input is transmitted to the touch server 528 in the input and output server interface 522 in the first virtual machine 520 (STd1).

Subsequently, the touch server 528 transmits the touch input to the display manager 527 and the display layer server 529 (STd2).

The display manager 527 or the display layer server 529 may be configured to execute the map application ICNa, since the touch input corresponds to execution input of the map application ICNa.

Consequently, the input and output server interface 522 in the first virtual machine 520 may write a request for execution of the map application ICNa or the coordinate information of the touch input in the shared memory 508 (STd3), and the third virtual machine 540 may read the request for execution of the map application ICNa or the coordinate information of the touch input written in the shared memory 508 using the received buffer index (STd4).

The third virtual machine 540 may execute the map application ICNa according to the received request for execution of the map application ICNa or the received coordinate information of the touch input, and may generate a map layer.

The input and output client interface 542 in the third virtual machine 540 may write the map layer in the shared memory 508 (STd5), and the first virtual machine 520 may receive the map layer written in the shared memory 508 using the received buffer index (STd6).

The display manager 527 or the display layer server 529 may receive the map layer based on execution of the map application ICNa.

The input and output server interface 522 in the first virtual machine 520 may generate a first composite overlay including the map layer, a vehicle speed indicator 212a, and an in-vehicle temperature indicator 213a.

The input and output server interface 522 in the first virtual machine 520 may write the first composite overlay including the map layer, the vehicle speed indicator 212a, and the in-vehicle temperature indicator 213a in the shared memory 508 (STd7), and the second virtual machine 530 may receive the first composite overlay written in the shared memory 508 using the received buffer index (STd8).

The second virtual machine 530 may be configured to display the first composite overlay including the map layer, the vehicle speed indicator 212a, and the in-vehicle temperature indicator 213a on the first display 180a. Consequently, the touch input may be rapidly and accurately processed.

Meanwhile, the input and output server interface 522 in the first virtual machine 520 may generate a second composite overlay including a map layer, a vehicle speed indicator 212b, and an in-vehicle temperature indicator 213b.

The input and output server interface 522 in the first virtual machine 520 may write the second composite overlay including the map layer, the vehicle speed indicator 212b, and the in-vehicle temperature indicator 213b in the shared memory 508, and the third virtual machine 540 may receive the second composite overlay written in the shared memory 508 using the received buffer index (STd9).

The third virtual machine 540 may be configured to display the second composite overlay including the map layer, the vehicle speed indicator 212b, and the in-vehicle temperature indicator 213b on the second display 180b.

Meanwhile, the input and output server interface 522 in the first virtual machine 520 may generate a third composite overlay including a map layer and an in-vehicle temperature indicator 213c.

The input and output server interface 522 in the first virtual machine 520 may write the third composite overlay including the map layer and the in-vehicle temperature indicator 213c in the shared memory 508, and the fourth virtual machine 550 may receive the third composite overlay written in the shared memory 508 using the received buffer index (STd10).

The fourth virtual machine 550 may be configured to display the third composite overlay 905c including the map layer and the in-vehicle temperature indicator 213c on the third display 180c.

It will be apparent that, although the preferred embodiments have been shown and described above, the present disclosure is not limited to the above-described specific embodiments, and various modifications and variations can be made by those skilled in the art without departing from the gist of the appended claims. Thus, it is intended that the modifications and variations should not be understood independently of the technical spirit or prospect of the present disclosure.

## Claims

1. A signal processing device comprising a processor configured to perform signal processing for a display located in a vehicle, wherein
the processor executes first to third virtual machines on a hypervisor in the processor,
the second virtual machine is operated for a first display,
the third virtual machine is operated for a second display, and
the first virtual machine in the processor receives touch input to the first display or the second display and transmits information regarding the touch input to the second virtual machine or the third virtual machine.

2. The signal processing device of claim 1, wherein the touch input is not input to the second virtual machine and the third virtual machine.

3. The signal processing device of claim 1, wherein the information regarding the touch input comprises coordinate information of the touch input.

4. The signal processing device of claim 1, wherein, in response to touch input corresponding to an overlay provided by the third virtual machine, among a plurality of overlays displayed on the first display, the first virtual machine in the processor is configured to transmit the information regarding the touch input not to the second virtual machine but to the third virtual machine.

5. The signal processing device of claim 1, wherein, in response to touch input corresponding to an overlay provided by the second virtual machine, among a plurality of overlays displayed on the first display, the first virtual machine in the processor is configured to transmit the information regarding the touch input to the second virtual machine.

6. The signal processing device of claim 1, wherein, in response to touch input corresponding to an overlay provided by the second virtual machine, among a plurality of overlays displayed on the second display, the first virtual machine in the processor is configured to transmit the information regarding the touch input to the second virtual machine.

7. The signal processing device of claim 1, wherein, in response to touch input corresponding to an overlay provided by the third virtual machine, among a plurality of overlays displayed on the second display, the first virtual machine in the processor is configured to transmit the information regarding the touch input to the third virtual machine.

8. The signal processing device of claim 1, wherein the first virtual machine in the processor is configured to detect an overlay corresponding to the touch input, and transmit the information regarding the touch input to a virtual machine providing the detected overlay, which is one of the second virtual machine and the third virtual machine.

9. The signal processing device of claim 1, wherein the first virtual machine is configured to store coordinate information of the touch input in a shared memory.

10. The signal processing device of claim 9, wherein
the first virtual machine is configured to transmit a buffer index regarding the shared memory to the second virtual machine or the third virtual machine, and
the second virtual machine or the third virtual machine is configured to read the coordinate information of the touch input written in the shared memory based on the received buffer index.

11. The signal processing device of claim 1, wherein
the first virtual machine comprises an input and output server interface,
each of the second virtual machine and the third virtual machine comprises an input and output client interface,
the input and output server interface in the first virtual machine is configured to store coordinate information of the touch input in a shared memory, and
the input and output client interface in the second virtual machine or the third virtual machine is configured to read the coordinate information of the touch input written in the shared memory.

12. The signal processing device of claim 1, wherein the first virtual machine is configured to transmit a composite overlay generated by combining an overlay from the second virtual machine and at least one overlay from the third virtual machine with each other to the second virtual machine or the third virtual machine.

13. The signal processing device of claim 1, wherein
in response to the information regarding the touch input corresponding to at least one overlay from the third virtual machine,
the first virtual machine is configured to transmit the information regarding the touch input to the third virtual machine, and
the third virtual machine is configured to change the at least one overlay based on the touch input and display the changed overlay on the second display.

14. The signal processing device of claim 13, wherein
the third virtual machine is configured to transmit the changed overlay to the first virtual machine, and
the first virtual machine is configured to transmit the changed overlay to the second virtual machine.

15. The signal processing device of claim 1, wherein
in response to the information regarding the touch input corresponding to operation of a hardware device in the vehicle while corresponding to at least one overlay from the third virtual machine,
the first virtual machine is configured to transmit the information regarding the touch input to the third virtual machine and operate the hardware device in the vehicle based on the touch input.

16. The signal processing device of claim 1, wherein
in response to the information regarding the touch input corresponding to an overlay from the second virtual machine,
the first virtual machine is configured to transmit the information regarding the touch input to the second virtual machine, and
the second virtual machine is configured to change the overlay based on the touch input and display the changed overlay on the second display.

17. The signal processing device of claim 16, wherein
the second virtual machine is configured to transmit the changed overlay to the first virtual machine, and
the first virtual machine is configured to transmit the changed overlay to the third virtual machine.

18. The signal processing device of claim 1, wherein
the processor further executes a fourth virtual machine operated for a third display on the hypervisor in the processor, and
the first virtual machine in the processor is configured to receive touch input to any one of the first display to the third display and transmit information regarding the received touch input to any one of the second virtual machine to the fourth virtual machine.

19. The signal processing device of claim 1, wherein the first virtual machine receives and processes wheel speed sensor data of the vehicle, and transmits an overlay indicating the processed wheel speed sensor data or speed information corresponding to the processed wheel speed sensor data to at least one of the second virtual machine or the third virtual machine.

20. A display apparatus for vehicles, the display apparatus comprising:
a first display;
a second display; and
a signal processing device comprising a processor configured to perform signal processing for the first display and the second display, wherein
the signal processing device comprises the signal processing device of any one of claims 1 to 19.
